# EUROPEAN PATENT APPLICATION

(11) **EP 2 243 982 A1**
(43) Date of publication of application: **27.10.2010**
(21) Application number: 09713370.6
(22) Date of filing: 17.02.2009
(51) Int. Cl.: F16H 1/32, B61C 9/46, F16H 57/02

(54) **RAILWAY VEHICLE DRIVE UNIT**

(30) Priority: 18.02.2008 JP 2008035940
(71) Applicant: NTN Corporation, Osaka-shi, Osaka 550-0003 (JP)
(72) Inventor: MIKI, Daisuke, Kuwana-shi Mie 511-0811 (JP); KATAOKA, Yukihiro, Kuwana-shi Mie 511-0811 (JP); ADACHI, Takaya, Kuwana-shi Mie 511-0811 (JP); YAMADA, Masahiro, Kuwana-shi Mie 511-0811 (JP); GOTO, Daisuke, Kuwana-shi Mie 511-0811 (JP); TAMADA, Kenji, Kuwana-shi Mie 511-0811 (JP)
(74) Representative: Grosse, Felix Christopher
(86) International application number: PCT/JP2009/052679
(87) International publication number: WO 2009/104594

(57) **Abstract**

A railway vehicle drive unit (12) is a drive unit to rotatably drive a wheel (11) of a railway vehicle. More specifically, it includes a reducer housing (13) held on an inner diameter surface of the wheel (11), and integrally rotating with the wheel (11), an input side rotation member (14) connected to a drive source, a reducing mechanism (15) to reduce rotation speed of the input side rotation member (14) and transmit it to the reducer housing (13), a fixed member (23) arranged in the reducer housing (13) and connected and fixed to a vehicle body, axle bearings (24) and (25) to rotatably support the reducer housing 13 with respect to the fixed member (23), and lubricant oil circulating mechanisms (32) and (33) to circulate a lubricant oil between the reducing mechanism and the axle bearings (24) and (25).

## Description

### TECHNICAL FIELD

The present invention relates to a railway vehicle drive unit and more particularly, to a railway vehicle drive unit capable of driving right and left wheels independently.

### BACKGROUND ART

A conventional railway vehicle drive unit is disclosed in Japanese Unexamined Patent Publication No. 2007-230508, for example. The railway vehicle drive unit disclosed in this document includes a motor, and a reducer to reduce rotation speed of the motor and transmit it to a wheel.

In this railway vehicle drive unit, a cycloidal reducer which is compact in size and implements a high reduction ratio is used to generate torque required to run a railway vehicle, and to provide a large passenger compartment space. More specifically, it is composed of an input shaft integrally rotating with the motor, a curved plate rotatably supported by an eccentric part provided in the input shaft, an outer pin to generate rotation motion of the curved plate by engaging with a periphery of the curved plate, and an inner pin to convert the rotation motion of the curved plate to revolution motion and transfer it to the wheel.

According to the above reducer, the components rotate while they are in contact with each other, so that a lubricant oil to lubricate contact parts between them is needed. However, the lubricant, oil in the reducer is moved toward the radial outer side due to centrifugal force generated by the rotation, the lubricant oil is likely to run short in the vicinity of the input shaft (on the radial inner side). Meanwhile, when the lubricant oil sealed in the reducer is increased to ensure a lubricant oil amount around the input shaft, heat generation is increased due to agitation resistance, and a torque loss of the reducer is increased.

In addition, since the lubricant oil sealed in the reducer spreads along an inner diameter surface of a casing due to the centrifugal force generated by the rotation of the input shaft and the like, an oil surface height when the reducer is operated is lower than that when it is stopped. That is, the problem is that the lubricant oil amount runs short in the vicinity of the input shaft when the reducer is operated.

### DISCLOSURE OF THE INVENTION

It is an object of the present invention to provide a railway vehicle drive unit superior in lubrication performance, by keeping a constant oil surface height of a lubricant oil.

It is another object of the present invention to provide a railway vehicle drive unit in which heat generation and torque loss are decreased, and a lubrication performance is improved.

A railway vehicle drive unit according to the present invention is a drive unit to rotatably drive a wheel of a railway vehicle. More specifically, it includes a reducer housing held on an inner diameter surface of the wheel, and integrally rotating with the wheel, an input side rotation member connected to a drive source, a reducing mechanism to reduce rotation speed of the input side rotation member and transmit it to the reducer housing, a fixed member arranged in the reducer housing, and connected and fixed to a vehicle body, an axle bearing to rotatably support the reducer housing with respect to the fixed member, and a lubricant oil circulating mechanism to circulate a lubricant oil between the reducing mechanism and the axle bearing.

The sealed amount of the lubricant oil can be reduced by circulating the lubricant oil in the reducer housing as described above. As a result, the heat generation and torque loss can be reduced in the reducing mechanism.

Preferably, the lubricant oil circulating mechanism circulates the lubricant oil by use of centrifugal force generated with the rotation of the input side rotation member. Thus, the device can be compact in size, as compared with a case where a circulation device is provided outside.

As one embodiment, the lubricant oil circulating mechanism includes a lubricant oil path radially penetrating an inside of the fixed member to return the lubricant oil from a radial outer side to a radial inner side.

Preferably, the axle bearing is a tapered roller bearing including an inner ring fixed to an outer diameter surface of the fixed member, an outer ring fixed to an inner diameter surface of the reducer housing, and a plurality of tapered rollers arranged between the inner ring and the outer ring. In addition, a seal member to seal the reducer housing is arranged between the reducer housing and the fixed member so as to be opposed to a large diameter side end of the tapered roller. An opening part of the lubricant oil path on the radial outer side is provided between the tapered roller bearing and the seal member. The lubricant oil in the tapered roller bearing is discharged from the large diameter side end due to the centrifugal force. Thus, the opening part of the lubricant oil path on the radial outer side is preferably provided in a position adjacent to the large diameter side end of the axle bearing.

As one embodiment, the seal member has a lip part being slidably in contact with an outer diameter surface of the fixed member, and it is fixed to an inner diameter surface of the reducer housing and integrally rotates with the reducer housing.

Preferably, the input side rotation member has an eccentric part. The reducing mechanism includes a revolution member rotatably supported with respect to the eccentric part, to execute revolution motion around a rotation axis of the input side rotation member, a rotation regulation member to prevent rotation motion of the revolution member, allowing the revolution motion thereof, and a periphery engagement member fixed to the reducer housing, to rotate the reducer housing at speed reduced with respect to the input side rotation member by engaging with a periphery of the revolution member. Thus, an opening part of the lubricant oil path on the radial inner side is provided in a position opposed to the eccentric part. Since the input side rotation member rotates at high speed, a large amount of lubricant oil is required in the vicinity of the eccentric part. Thus, the opening part of the lubricant oil path on the radial inner side is preferably provided in a position opposed to the eccentric part.

Preferably, the reducing mechanism is held in a space sealed with the lubricant oil, and the lubricant oil circulating mechanism is provided with a lubricant oil holding chamber communicating with the space sealed with the lubricant oil in such a manner that the lubricant oil can be moved between it and the space.

In the above configuration, the lubricant oil is moved between the space and the lubricant oil holding chamber according to a change in oil surface height in the space sealed with the lubricant oil. As a result, a change in oil surface height can be small between a stopped time and operated time of the reducing mechanism.

Preferably, the lubricant oil holding chamber is arranged in the reducer housing. The space and the lubricant oil holding chamber are connected through a vent hole to uniform their internal pressures and a lubricant oil passage to uniform their oil surface heights. Thus, the oil surface height can be adjusted with a simple configuration.

Preferably, the drive unit includes a detecting means for detecting a state of the lubricant oil sealed in the space, and a lubricant oil moving means for moving the lubricant oil between the space sealed with the lubricant oil and the lubricant oil holding chamber, based on a detected result of the detecting means.

Preferably, the lubricant oil moving means is a pressure adjustment device to increase a pressure in the lubricant oil holding chamber under the condition that the detected result of the detecting means exceeds a threshold value, and decrease the pressure in the lubricant oil holding chamber under the condition that the detected result of the detecting means falls below the threshold value. Thus, the appropriate threshold value can be selected based on usage circumstances of the railway vehicle drive unit.

As one embodiment, the lubricant oil holding chamber has a piston to separate its inside into a first region isolated from the space sealed with the lubricant oil, and a second region communicating with the space sealed with the lubricant oil. Thus, the pressure adjustment device increases or decreases the pressure in the lubricant oil holding chamber by moving the piston.

Preferably, the detecting means is a temperature sensor to detect a temperature of the lubricant oil sealed in the space. The temperature of the lubricant oil rises in the operated time of the reducing mechanism. Therefore, when the temperature of the lubricant oil exceeds a constant value, the lubricant oil is supplied from the lubricant oil holding chamber to the space sealed with the lubricant oil, so that the oil surface height can be adjusted, and the temperature is prevented from rising.

Preferably, the detecting means is a rotation sensor to detect rotation speed of the input side rotation member. The centrifugal force applied to the lubricant oil depends on the rotation speed of the input side rotation member. Therefore, when the rotation speed of the input side rotation member exceeds a constant value, the lubricant oil is supplied from the lubricant oil holding chamber to the space sealed with the lubricant oil, so that the oil surface height can be adjusted.

Preferably, the lubricant oil holding chamber is provided outside the reducer housing. Thus, a degree of freedom in size of the lubricant oil holding chamber can increase.

Preferably, the lubricant oil holding chamber is provided with a filter device to filter the internal lubricant oil. Thus, the lubrication performance of the railway vehicle drive unit can be maintained for a long period of time.

In addition, it is preferable that the reducing mechanism is held in a space sealed with the lubricant oil, and the lubricant oil circulating mechanism includes a lubricant oil transferring mechanism to transfer the lubricant oil from a bottom region to an upper region in the space, by use of at least one rotation of the reducer housing and the input side rotation member.

In the above configuration, since the lubricant oil can be actively supplied to the upper region of the space sealed with the lubricant oil in the reducer housing, the railway vehicle drive unit can be superior in lubrication performance.

As one embodiment, the lubricant oil transferring mechanism transfers the lubricant oil from the bottom region to the upper region in the space sealed with the lubricant oil, by use of the rotation of the input side rotation member.

Preferably, the drive unit further includes a fixed member arranged in the reducer housing, and connected and fixed to the vehicle body. The fixed member internally includes the lubricant oil transferring mechanism, a lubricant oil supply path extending from the lubricant oil transferring mechanism toward the bottom region in the space sealed with the lubricant oil, to supply the lubricant oil to the lubricant oil transferring mechanism, and a lubricant oil discharge path extending from the lubricant oil transferring mechanism toward the upper region in the space sealed with the lubricant oil, to discharge the lubricant oil from the lubricant oil transferring mechanism.

Preferably, the lubricant oil transferring mechanism includes a first pump to pump up the lubricant oil in response to a positive rotation of the input side rotation member, and a second pump to pump up the lubricant oil in response to a negative rotation of the input side rotation member. Thus, the lubricant oil can be pumped when a railway vehicle goes ahead and goes back.

More specifically, the first pump includes a first drive gear having teeth around its outer diameter surface, and integrally rotating with the input side rotation member, and a first driven gear having teeth meshing with the first drive gear, around its inner diameter surface, and being rotatably supported by the fixed member, and rotating around a point shifted from a rotation center of the first drive gear to one horizontal direction. The second pump includes a second drive gear having teeth around its outer diameter surface and integrally rotating with the input side rotation member at a position different from that of the first pump, and a second driven gear having teeth meshing with the second drive gear, around its inner diameter surface, and being rotatably supported by the fixed member, and rotating around a point shifted from a rotation center of the second drive gear to the other horizontal direction.

Alternatively, the first pump is composed of a drive gear having teeth around its outer diameter surface and integrally rotating with the input side rotation member, and a first driven gear having teeth meshing with the drive gear, around its outer diameter surface, and being rotatably arranged on one side of the drive gear in a horizontal direction. The second pump is composed of the drive gear, and a second driven gear having teeth meshing with the drive gear, around its outer diameter surface, and being rotatable arranged on the other side of the drive gear in the horizontal direction.

As another embodiment, the input side rotation member has an eccentric part. The reducing mechanism includes a revolution member rotatably supported with respect to the eccentric part, to execute revolution motion around a rotation axis of the input side rotation member, a plurality of rotation regulation members to prevent rotation motion of the revolution member, allowing the revolution motion thereof, a periphery engagement member fixed to the reducer housing, to rotate the reducer housing at speed reduced with respect to the input side rotation member by engaging with a periphery of the revolution member, and a counterweight fitted and fixed to the input side rotation member with a phase so as to offset unbalance inertia coupling due to eccentric motion. The lubricant oil transferring mechanism is provided in the counterweight.

More specifically, the counterweight includes a large diameter fun-shaped part, and a small diameter fun-shaped part having a radius smaller than that of the large diameter fun-shaped part and connected to the large diameter fun-shaped part in such as manner that their chords are in contact with each other. The lubricant oil transferring mechanism has an opening part in the chord of the large diameter fun-shaped part, and includes a circumferential oil path circumferentially extending in the large diameter fun-shaped part, and a radial oil path extending from the circumferential oil path toward an outer diameter surface of the large diameter fun-shaped part.

Alternatively, the counterweight includes a large diameter fun-shaped part, and a small diameter fun-shaped part having a radius smaller than that of the large diameter fun-shaped part and connected to the large diameter fun-shaped part in such as manner that their chords are in contact with each other. The lubricant oil transferring mechanism is a fin projecting from an end face of the large diameter fun-shaped part in a thickness direction.

In the above configuration also, the large diameter fun-shaped part of the counterweight holds the lubricant oil when the lubricant oil in the reducer housing passes through the bottom region of the space sealed with the lubricant oil, and discharges it in the upper region, so that the lubricant oil can be actively supplied to the upper region.

Further preferably, the reducing mechanism has a plurality of the counterweights arranged in such a manner that phases of the large diameter fun-shaped parts differ from each other. Thus, the lubricant oil can be stably transferred.

As another embodiment, the lubricant oil transferring mechanism transfers the lubricant oil from the bottom region to the upper region in the space sealed with the lubricant oil, by use of the rotation of the reducer housing.

Preferably, the lubricant oil transferring mechanism is composed of concavo-convex parts formed in surfaces of the reducer housing, and a member rotating with the rotation of the reducer housing. As one embodiment, the concavo-convex part is composed of projections projecting from an inner diameter surface of the reducer housing and extending in a direction intersecting with a rotation direction of the reducer housing.

Preferably, the projections are provided in a plurality positioned in the inner diameter surface of the reducer housing, at regular intervals. As a result, the lubricant oil can be stably transferred.

Preferably, a wall surfaces of the projection opposed to a circumferential direction of the reducer housing is in contact with a tangent line of the inner diameter surface of the reducer housing, at an acute angle. As one embodiment, a cross-sectional shape of the projection perpendicular to a rotation axis of the reducer housing is an isosceles trapezoid having a long side and a short side parallel to each other, and the short side is arranged so as to be in contact with an inner diameter surface of the reducer housing. As a result, an ability to hold the lubricant oil can be further improved.

Further preferably, the projection is formed in an inner diameter surface of an annular fixed in the inner diameter surface of the reducer housing. Thus, a structure can be simple as compared with the case where the projection is directly formed in the inner diameter surface of the reducer housing.

As another embodiment, the drive unit further includes a fixed member arranged in the reducer housing, and connected and fixed to the vehicle body, and an axle bearing including an inner ring fixed to an outer diameter surface of the fixed member, an outer ring fixed to an inner diameter surface of the reducer housing, a plurality of rolling bodies arranged between the inner ring and the outer ring, and a retainer retaining an interval of the adjacent rolling bodies, and rotatably supporting the reducer housing with respect to the fixed member. The concavo-convex part is provided in at least one of the outer ring, the rolling body, and the retainer. The coneavo-convex part is provided in at least one of the outer ring, the rolling body, and the retainer.

As further another embodiment, the drive unit further includes a fixed member arranged in the reducer housing, and connected and fixed to the vehicle body, and an annular seal member fixed to an inner diameter surface of the reducer housing, to seal a space between the reducer housing and the fixed member. The lubricant oil transferring mechanism is a weir expanding from the seal member to a direction intersecting with a rotation direction of the reducer housing.

### BRIEF DESCRIPTION OF DRAWINGS

Fig. 1 is a view showing a railway vehicle wheel drive device according to one embodiment of the present invention.
Fig. 2 is a cross-sectional view taken along a line II-II in Fig. 1.
Fig. 3 is an enlarged view of a periphery of an eccentric part in Fig.
Fig. 4 is a view showing a railway vehicle wheel drive device according to a second embodiment of the present invention.
Fig. 5 is a view showing a variation of the railway vehicle wheel drive device according to the second embodiment of the present invention.
Fig. 6 is a view showing a railway vehicle wheel drive device according to a third embodiment of the present invention.
Fig. 7 is a cross-sectional view taken along a line VII-VII in Fig. 6.
Fig. 8 is an enlarged view of a periphery of an eccentric part in Fig.
Fig. 9 is an enlarged view of a periphery of a both-sided inner pin.
Fig. 10 is an enlarged view of a periphery of a cantilevered (one-sided) inner pin.
Fig. 11 is one example of a lubricant oil transferring mechanism.
Fig. 12 is another example of a lubricant oil transferring mechanism.
Fig. 13 is still another example of a lubricant oil transferring mechanism.
Fig. 14 is a view showing a counterweight provided with a lubricant oil transferring mechanism.
Fig. 15 is a view showing a railway vehicle wheel drive device according to another embodiment of the present invention.
Fig. 16 is a cross-sectional view taken along a line XVI-XVI in Fig. 15.
Fig. 17 is a view showing a first axle bearing.
Fig. 18 is a front view of a seal member.

### BEST MODE FOR CARRYING OUT THE INVENTION

### (1) First embodiment

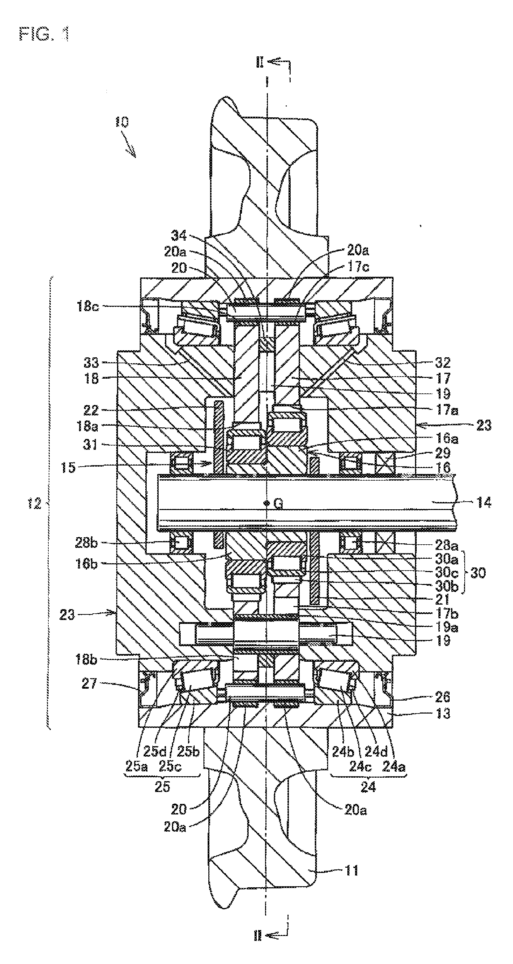

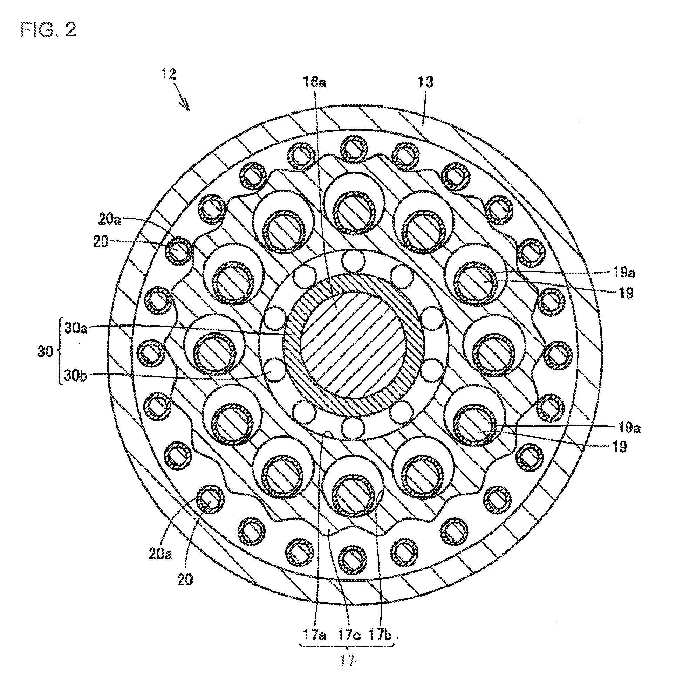

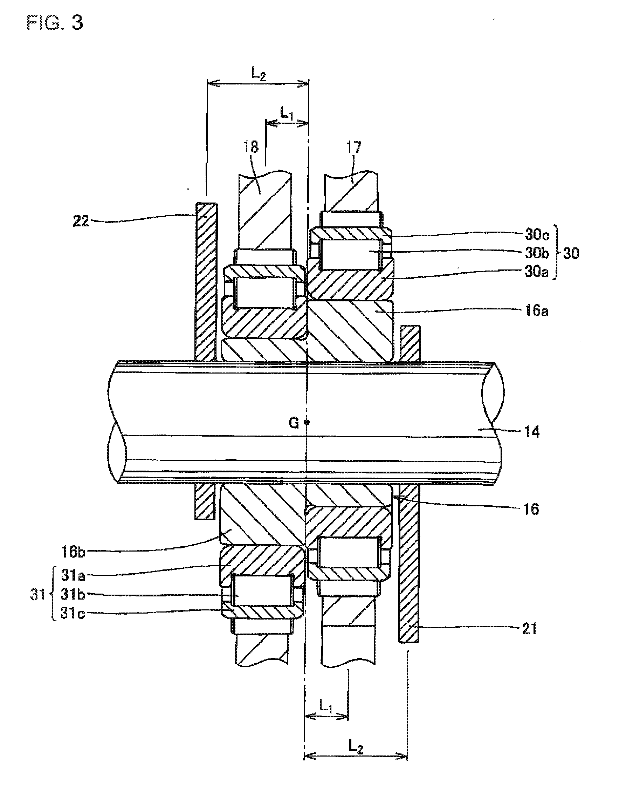

A description will be made of a railway vehicle drive unit 12 according to one embodiment of the present invention and a railway vehicle wheel drive device 10 including the railway vehicle drive unit 12, with reference to Figs. 1 to 3. In addition, Fig. 1 is a schematic cross-sectional view of the railway vehicle wheel drive device 10, Fig. 2 is a cross-sectional view taken along a line II-II in Fig 1, and Fig. 3 is an enlarged view showing a periphery of eccentric parts 16a and 16b.

First, referring to Fig. 1, the railway vehicle wheel drive device 10 is composed of a railway vehicle wheel 11 (hereinafter, referred to as "the wheel 11") and the drive unit 12 (hereinafter, referred to as "the railway vehicle drive unit 12") held on an inner diameter surface of the wheel 11 to reduce rotation speed of a drive source (not shown) and transmit it to the wheel 11, and arranged in a lower part of a railway vehicle body (not shown).

The railway vehicle drive unit 12 is mainly composed of a reducer housing 13, an input side rotation member 14, a reducing mechanism 15, a carrier 23 serving as a fixed member, and first and second axle bearings 24 and 25.

The reducer housing 13 is held on the inner diameter surface of the wheel 11, and holds the reducing mechanism 15 internally. In addition, the reducing mechanism 15 is composed of an eccentric member 16, curved plates 17 and 18 serving as revolution members, a plurality of inner pins 19 serving as rotation regulation members, a plurality of outer pins 20 serving as periphery engagement members, and members associated with the above components, and reduces rotation speed of the input side rotation member 14 and transmits it to the reducer housing 13.

In addition, the first and second axle bearings 24 and 25 are arranged between an inner diameter surface of the reducer housing 13 and an outer diameter surface of the carrier 23. The reducer housing 13 is rotatable with respect to the carrier 23, and also functions as an output side rotation member (axle) integrally rotating with the wheel 11.

The first axle bearing 24 is a tapered roller bearing including an inner ring 24a fixed to the outer diameter surface of the carrier 23, an outer ring 24b fixed to the inner diameter surface of the reducer housing 13, a plurality of tapered rollers 24c arranged between the inner ring 24a and the outer ring 24b, a retainer 24d retaining an interval of the adjacent tapered rollers 24c. Since the second rolling bearing 25 has the same configuration, its description is not reiterated. When the tapered roller bearing having high load capacity is used as the first and second axle bearings 24 and 25, a radial load and an axial load applied to the wheel 11 can be appropriately supported.

In addition, the first axle bearing 24 and the second axle bearing 25 rotatably support the reducer housing 13 with respect to the carrier 23 on one axial side (right side in Fig. 1) of a fit position (more specifically, "a fit width center of the wheel 11" shown by a dashed line in Fig. 1) of the wheel 11 and on the other axial side (left side in Fig. 1) of the fit position thereof, respectively. According to this embodiment, distances (offsets) of the first axle bearing 24 and the'second axle bearing 25 from the fit width center of the wheel 11 are set to be equal to each other.

Furthermore, the first and second axle bearings 24 and 25 are arranged such that their small diameter side ends are opposed to each other (back-to-back coupling). Thus, a moment load applied to the wheel 11 can be appropriately supported.

In addition, seal members 26 and 27 to seal a lubricant oil in the reducer housing 13 are provided at both axial ends of the reducer housing 13. The seal members 26 and 27 each have lip parts being in sliding contact with the outer diameter surface of the carrier 23, and are fixed to the inner diameter surface of the reducer housing 13, and integrally rotate with the reducer housing 13.

The input side rotation member 14 is connected to the drive source (such as a motor), and rotates with the rotation of the drive source. In addition, its both sides are supported by rolling bearings 28a and 28b on both sides of the curved plates 17 and 18, and rotatably held with respect to the carrier 23. In addition, according to this embodiment, a cylindrical roller bearing is used as each of the rolling bearings 28a and 28b. In addition, a seal member 29 to seal the lubricant oil in the reducer housing 13 is arranged on the outer side (right side in Fig. 1) of the rolling bearing 28a.

The eccentric member 16 has the first and second eccentric parts 16a and 16b, and is fitted and fixed to the input side rotation member 14. The first and second eccentric parts 16a and 16b are arranged so as to offset the centrifugal force due to eccentric motion to each other, that is, their phases are shifted by 180°. Consequently, the first and second eccentric parts 16a and 16b also function as balance adjusting mechanisms to absorb unbalance load generated due to the eccentric motion.

The curved plate 17 is supported by a rolling bearing 30 so as to be relatively rotatable with respect to the first eccentric part 16a, and executes revolution motion around a rotation axis of the input side rotation member 14. In addition, referring to Fig. 2, the curved plate 17 has first and second through holes 17a and 17b penetrating in a thickness direction, and a plurality of waveforms 17c composed of a trochoid-based curve such as epitrochoid along its periphery.

The first through hole 17a is formed in the center of the curved plate 17, and receives the first eccentric part 16a and the rolling bearing 30. The second through holes 17b are circumferentially provided around a rotation axis of the curved plate 17 at regular intervals, and receive the inner pins 19 held by the carrier 23. The waveforms 17c engage with the outer pins 20 held by the reducer housing 13, and transmit the rotation of the curved plate 17 to the reducer housing 13. In addition, the curved plate 18 has the same configuration, and is rotatably supported by a rolling bearing 31 with respect to the second eccentric part 16b.

The rolling bearing 30 is a cylindrical roller bearing provided with an inner ring member 30a fitted to an outer diameter surface of the eccentric part 16a and having an inner side track surface on its outer diameter surface, an outer side track surface directly formed on the inner diameter surface of the through hole 17a of the curved plate 17, a plurality of cylindrical rollers 30b arranged between the inner side track surface and the outer side track surface, and a retainer 30c retaining an interval of the adjacent cylindrical rollers 30b. Since the rolling bearing 31 has the same configuration, its description is not reiterated.

In addition, when it is assumed that a center point of the two curved plates 17 and 18 is G, the center point G coincides with a gravity center position of the wheel 11, but the center point G and the wheel gravity center position are preferably offset in order to minimize the moment load applied from the wheel 11 to the railway vehicle drive unit 12..Thus, the components (such as the curved plates 17 and 18, the inner pin 19, and outer pin 20) are inclined to prevent an excessive load from being generated in a contact part. As a result, the railway vehicle drive unit 12 smoothly rotates, and its durability is improved.

In addition, a circumscribed ring 34 which is circumscribed on the plurality of inner pins 19 is arranged between the two curved plates 17 and 18. Thus, an axial motion amount of each of the curved plates 17 and 18 is regulated. In addition, since the curved plates 17 and 18 are sliding contact with the circumscribed ring 34, it is preferable that their wall surfaces to be in contact with each other are subjected to a grinding treatment. In addition, a function of the circumscribed ring 34 may be replaced with an inscribed ring inscribed on the plurality of inner pins 19, or an inscribed ring inscribed on the plurality of outer pins 20.

The inner pins 19 are circumferentially provided around the rotation axis of the input side rotation member 14 at regular intervals. Some of the plurality of inner pins 19 are roughly in the shape of a column having a large diameter part in the center and a small diameter part having a diameter relatively smaller than that of the large diameter part, at each end. Thus, the small diameter part is held by the carrier 23, and the large diameter part is positioned in the second through holes 17b and 18b of the curved plates 17 and 18. In addition, an end face of the large diameter part abuts on a wall surface of the carrier 23 to function as a reference surface to position the inner pin 19. In addition, the other inner pins 19 are in the shape of a simple column having the same diameter in a longitudinal direction.

Furthermore, an inner pin collar 19a is attached to a position (large diameter part) which abuts on inner wall surfaces of the second through holes 17b and 18b of the curved plates 17 and 18. Thus, frictional resistance between the curved plates 17 and 18 and the inner pin 19 can be reduced. In addition, the inner pin collar 19a according to this embodiment is a sliding bearing.

In addition, diameters of the second through holes 17b and 18b are set to be larger by a. predetermined amount than a diameter (a maximum outer diameter including the inner pin collar 19a) of the inner pin 19. Thus, while the curved plates 17 and 18 try to rotate with the rotation of the input side rotation member 14, the inner pin 19 functions as the rotation regulation member to stop rotation motion of the curved plates, allowing the revolution motion thereof.

The outer pins 20 are circumferentially provided around the rotation axis of the input side rotation member 14 at regular intervals. A center part of the outer pin 20 is held by the reducer housing, and both ends thereof abut on the axle bearings 24 and 25 and fixed thereto. Thus, the outer pin 20 engages with the waveforms 17c and 18c of the curved plates 17 and 18 to rotate the reducer housing 13 at speed reduced with respect to the input side rotation member 14.

Furthermore, an outer pin collar 20a is attached to a position which abuts on the waveforms 17c and 18c of the curved plates 17 and 18. Thus, frictional resistance between the curved plates 17 and 18 and the outer pin 20 can be reduced. In addition, the outer pin collar 20a according to this embodiment is a sliding bearing.

A counterweight 21 has a through hole to receive the input side rotation member 14, at a position other than its gravity center, and fitted and fixed to the input side rotation member 14 with its phase shifted so as to offset unbalance inertia couple due to the eccentric motion of the eccentric part 16a, that it, shifted by 180° from that of the eccentric part 16a. Consequently, the counterweight 21 functions as a balance adjusting mechanism to absorb an unbalance load generated due to the eccentric motion of the eccentric part 16a. In addition, a counterweight 22 has the same configuration, and is fitted and fixed to the input side rotation member 14 with its phase shifted to offset unbalance inertia couple due to eccentric motion of the eccentric part 16b.

Referring to Fig. 3, regarding the right side of the center point G of the two curved plates 17 and 18, a relationship that L₁ × m₁ × ε₁ = L₂ × m₂ × ε₂ is satisfied wherein L₁ represents a distance between the center point G and a center of the curved plate 17, m₁ represents a sum of the mass of the curved plate 17, the rolling bearing 30, and the eccentric part 16a, ε₁ represents an eccentric amount of the gravity center of the curved plate 17 from the rotation axis, L₂ represents a distance between the center point G and the counterweight 21, m₂ represents the mass of the counterweight 21, and ε₂ represents an eccentric amount of the gravity center of the counterweight 21 from the rotation axis. In addition, the same relationship is satisfied between the curved plate 18 and the counterweight 22 on the left side of the center point G in Fig. 3.

The carrier 23 is connected and fixed to the railway vehicle body, and holds the inner pin 19 in wall surfaces opposed to the curved plates 17 and 18, and rotatably supports each of the reducer housing 13 with the first and second axle bearings 24 and 25 fitted and fixed to its outer diameter surface, and the input side rotation member 14 with the rolling bearings 28a and 28b fitted and fixed to its inner diameter surface.

In addition, the carrier 23 is provided with a lubricant oil circulating mechanism to circulate the lubricant oil between the reducing mechanism 15 and the axle bearings 24 and 25. This lubricant oil circulating mechanism circulates the lubricant oil by use of the centrifugal force generated due to the rotation of the input side rotation member 14. More specifically, a plurality of lubricant oil paths 32 and 33 are formed so as to penetrate the inside of the carrier 23 in a diameter direction to return the lubricant oil from the radial outer side to the radial inner side.

An opening part of the lubricant oil path 32 on the radial outer side is provided between a large diameter side end of the first axle bearing 24 and the seal member 26. Similarly, an opening part of the lubricant oil path 33 on the radial outer side is provided between a large diameter side end of the second axle bearing 25 and the seal member 27. The lubricant oil in the tapered roller bearings 24 and 25 is discharged from the large diameter side end by the centrifugal force. Thus, it is preferable that the opening parts of the lubricant oil paths 32 and 33 on the radial outer side are provided in positions adjacent to the large diameter side ends of the first and second axle bearings 24 and 25, respectively.

Meanwhile, an opening part of the lubricant oil path 32 on the radial inner side is provided in a position opposed to the eccentric part 16a. Similarly, an opening part of the lubricant oil path 32 on the radial inner side is provided in a position opposed to the eccentric part 16b. Since the input side rotation member 14 rotates at high speed, a lot of lubricant oil is needed in the vicinity of the eccentric parts 16a and 16b, or more specifically, in the rolling bearings 30 and 31. Thus, it is preferable that the opening parts of the lubricant oil paths 32 and 33 on the radial inner side are provided in the positions opposed to the eccentric parts 16a and 16b, respectively.

A detailed description will be made of an operating principle of the railway vehicle drive unit 12 having the above configuration.

First, the input side rotation member 14 and the eccentric member 16 integrally rotate with the rotation of the drive source. At this time, while the curved plates 17 and 18 also try to rotate, their rotation motion is stopped by the inner pins 19 passing through the second through holes 17b and 18b, so that they only execute the revolution motion. That is, the curved plates 17 and 18 shift in parallel on the circumferential track around the rotation axis of the input side rotation member 14.

When the curved plates 17 and 18 execute the revolution motion, the waveforms 17c and 18c engage with the outer pins 20, and the reducer housing 13 and the wheel 11 integrally rotate in the same direction as that of the input side rotation member 14. At this time, the rotation speed transmitted from the curved plates 17 and 18 to the reducer housing 13 has been reduced and torque is high.

More specifically, a. reduction ratio of the railway vehicle drive unit 12 is calculated by a formula Z_{B}/(Z_{A}-Z_{B}) wherein Z_{A} represents the number of the outer pins 20, and Z_{B} represents the number of the waveforms of the curved plates 17 and 18, and a speed ratio in this embodiment shown in Fig. 1 is calculated by a formula 1/(n+1) wherein n represents the reduction ratio. Since Z_{A} = 24 and Z_{B} = 22 in the embodiment shown in Fig. 2, the reduction ratio is 11, and the speed ratio is 1/12. Therefore, even when a low-torque high-rotation type drive source is used, the torque required for the wheel 11 can be transmitted.

Thus, by employing the reducing mechanism 15 capable of obtaining the high reduction ratio without needing a multistage configuration, the railway vehicle drive unit 12 can be compact in size and implement the high reduction ratio. In addition, by providing the collars 19a and 20a for the inner pin 19 and outer pin 20, respectively in the positions which abut on the curved plates 17 and 18, the frictional resistance in the contact parts is reduced. As a result, transmission efficiency is improved in the railway vehicle drive unit 12.

Next, a detailed description will be made of a flow of the lubricant oil in the railway vehicle drive unit 12 having the above configuration.

First, the lubricant oil is previously sealed in the reducer housing 13. The lubricant oil is carried to the radial outer side by the centrifugal force generated due to the rotation of the input side rotation member 14. At this time, it is supplied to the rolling bearings 28a, 28b, 30, and 31, to between the curved plates 17, 18, and the rolling bearings 30, 31, between the curved plates 17, 18, and the inner pin 19, between the inner pin 19 and the inner pin collar 19a, between the curved plates 17, 18, and the circumscribed ring 34, between the curved plates 17, 18, and the outer pin 20, and between the outer pin 20 and the outer pin collar 20a.

Furthermore, the lubricant oil is discharged to the large diameter side ends of the first and second axle bearings 24 and 25 from the small diameter side ends through the inside of the bearings. Thus, the lubricant oil reaches spaces sandwiched between the first and second axle bearings 24 and 25, and the seal members 26 and 27, respectively and returns to the periphery of the input side rotation member 14 through the lubricant oil paths 32 and 33.

Thus, since the lubricant oil is circulated in the railway vehicle drive unit 12, the amount of the sealed lubricant oil can be small. As a result, heat generation and torque loss are reduced in the railway vehicle drive unit 12, and the high-speed rotation part (the periphery of the eccentric part 16) can be surely lubricated. In addition, by circulating the lubricant oil by use of the centrifugal force generated due to the rotation of the input side rotation member 14, the unit can be compact in size as compared with the case where a circulation device is provided outside.

In addition, while the two curved plates 17 and 18 of the reducing part B are provided with their phases shifted by 180° in the above embodiment, the number of the curved plates may be optionally set, and when three curved plates are provided, their phases are shifted by 120°, for example.

In addition, while the eccentric member 16 having the eccentric parts 16a and 16b is fitted and fixed to the input side rotation member 14 in the above embodiment, as another example, the eccentric parts 16a and 16b may be directly formed on the outer diameter surface of the input side rotation member 14.

Furthermore, the rolling bearings 24, 25, 28a, 28b, 30, and 31 in the above embodiment are not limited to the configurations shown in Fig. 1, and various kinds of bearings can be used such as a sliding bearing, cylindrical roller bearing, tapered roller bearing, needle roller bearing, self-aligning roller bearing, deep groove ball bearing, angular ball bearing, three point contact ball bearing, or four point contact ball bearing, regardless of whether the sliding bearing or the rolling bearing, regardless of whether a rolling body is the roller or ball, and regardless of whether a double row or single row.

In addition, while the collars 19a and 19b are the sliding bearings in the above embodiment, the rolling bearing may be used instead. In this case, it is preferable to use the needle roller with a view to reducing a size in a thickness direction.

Further, any kind of reducing mechanism can be used in place of the above described reducing mechanism 15 for the railway vehicle wheel drive device 10.

### (2) Second embodiment

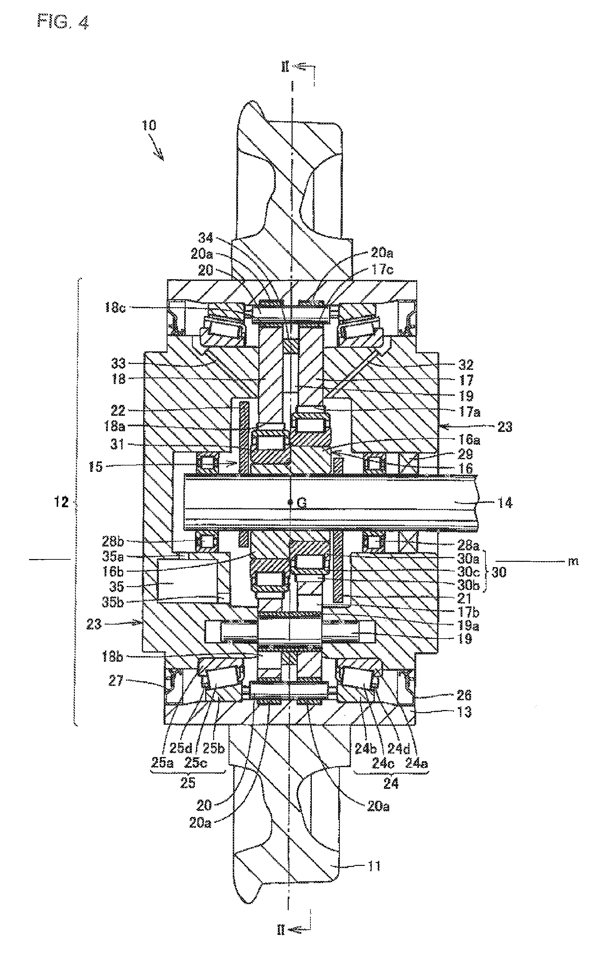

Next, a second embodiment of the present invention will be described. Fig. 4 is a view showing a configuration of a railway vehicle wheel drive device according to the second embodiment. Referring to Fig. 4, according to this embodiment, a railway vehicle drive unit 12 is composed of a reducer housing 13, an input side rotation member 14, a reducing mechanism 15, a carrier 23 as a fixed member, and first and second axle bearings 24 and 25, which is the same as the above embodiment.

However, this embodiment is different from the above embodiment in that a lubricant oil holding chamber 35 is provided in the carrier 23. Therefore, a part different from that of the above embodiment will be described in derail, and the same part has the same reference, and its description is not reiterated.

The reducer housing 13 has a space sealed with a lubricant oil, and is held on an inner diameter surface of a wheel 11. The space sealed with the lubricant oil means a region surrounded by the reducer housing 13, the carrier 23, and seal members 26 and 27. In addiction, it internally holds the reducing mechanism 15.

The reducing mechanism 15 is composed of an eccentric member 16, curved plates 17 and 18 serving as revolution members, a plurality of inner pins 19 serving as rotation regulation members, a plurality of outer pins 20 serving as periphery engagement members, and members associated with the above components, and reduces rotation speed of the input side rotation member 14 and transmits it to the reducer housing 13.

In addition, the reducing mechanism 15 is arranged in the space sealed with the lubricant oil with at least one part thereof soaked in the lubricant oil. More specifically, the lubricant oil is sealed such that an oil surface height is at a position of a line m in Fig. 4 under the condition that the reducing mechanism 15 is stopped.

The lubricant oil holding chamber 35 is arranged in the carrier 23, and communicates with the space sealed with the lubricant oil so that the lubricant oil can be moved between them. More specifically, the space sealed with the lubricant oil and the lubricant oil holding chamber 35 are connected through a vent hole 35a provided to uniform their internal pressures, and a lubricant oil path 35b provided to uniform their oil surface heights. Thus, the oil surface height in the lubricant oil holding chamber 35 is at a line m in Fig. 4 under the condition that the reducing mechanism 15 is stopped.

In addition, since the lubricant oil sealed in the space spreads along an inner periphery surface of the reducer housing 13 while the reducing mechanism 15 is operated, the oil surface height becomes lower than the line m in Fig. 4. In this case, the lubricant oil held in the lubricant oil holding chamber 35 is supplied to the space sealed with the lubricant oil through the lubricant oil path 35b. Meanwhile, when the reducing mechanism 15 is stopped and the oil surface height in the space sealed with the lubricant oil rises, the lubricant oil is discharged to the lubricant oil holding chamber 35 through the lubricant oil path 35b. As a result, a variation in oil surface height can be small between the operated time and the stopped time.

In addition, while the lubricant oil holding chamber 35 is arranged in the carrier 35 in this embodiment, the present invention is not limited to this, and it may be provided outside the reducer housing 13. When it is arranged in the reducer housing 13, the railway vehicle drive unit can be compact in size. Meanwhile, when it is arranged outside the reducer housing 13, the lubricant oil holding chamber can be large in size, so that the variation in oil surface height can be further small.

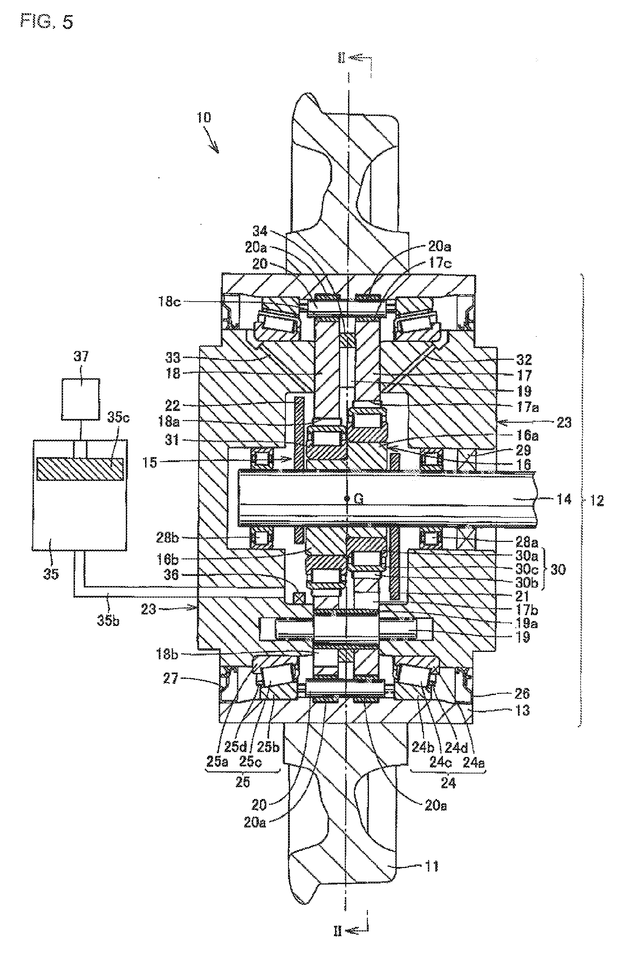

In addition, while the vent hole 35a and the lubricant oil path 35b are provided to move the lubricant oil between the space sealed with the lubricant oil and the lubricant oil holding chamber 35 in this embodiment, the present invention is not limited to this, and another method may be used. Fig. 5 is a view showing a variation of this embodiment. Referring to Fig. 5, a description will be made of a railway vehicle wheel drive device 10 and the railway vehicle drive unit 12 according to this variation. In addition, the same part as that in Fig. 4 has the same reference number and its description is not reiterated.

Referring to Fig. 5, the railway vehicle drive unit 12 is provided with a detecting means 36 for detecting a state of a lubricant oil sealed in a space, and a lubricant oil moving means 37 for moving the lubricant oil between the space sealed with the lubricant oil and a lubricant oil holding chamber 35, based on a detected result of the detecting means 36.

The lubricant oil holding chamber 35 in this embodiment is arranged outside the reducer housing 13, and communicates with the space sealed with the lubricant oil through a lubricant oil path 35b. In addition, a piston 35c is provided in the lubricant oil holding chamber 35. This piston 35c separates an inside of the lubricant oil holding chamber 35 into a first region (an upper region of the piston 35c) isolated from the space sealed with the lubricant oil, and a second region (a lower region of the piston 35c) communicating with the space sealed with the lubricant oil.

The detecting means 36 in this embodiment is a temperature sensor for detecting a temperature of the lubricant oil sealed in the space, and arranged in a bottom region (position soaked in the lubricant oil all the time) of the space sealed with the lubricant oil.

The lubricant oil moving means 37 is a pressure adjustment device which increases a pressure in the lubricant oil holding chamber under the condition that the detected result of the temperature sensor exceeds a threshold value, and decreases the pressure in the lubricant oil holding chamber under the condition that the detected result of the temperature sensor falls below the threshold value. More specifically, the pressure is increased in the lubricant oil holding chamber 35 by lowering the piston 35c, and the pressure is decreased in the lubricant oil holding chamber 35 by raising the piston 35c.

In the above configuration, a variation in oil surface height between a stopped time and an operated time of the reducing mechanism 15 can be small. In addition, the embodiment shown in Fig. 1 has a merit that can simplify the structure. Meanwhile, the threshold value in the embodiment shown in Fig. 4 can be selected according to a usage situation of the railway vehicle drive unit 12.

In addition, the detecting means 36 is not limited to the temperature sensor, and any kind of sensor may be used as long as it can detect the state of the lubricant oil sealed in the space directly or indirectly. For example, the detecting means 36 may be a rotation sensor to detect rotation speed of the input side rotation member 14. In this case, the lubricant oil moving means 37 increases a pressure in the lubricant oil holding chamber under the condition that a detected result of the rotation sensor exceeds a threshold value, and decreases the pressure in the lubricant oil holding chamber under the condition that the detected result of the rotation sensor falls below the threshold value.

Furthermore, a filter device (not shown) may be provided in the lubricant oil holding chamber 35. The lubrication performance of the railway vehicle drive unit 12 can be maintained for a long period of time by supplying the lubricant oil filtered by the filter device to the space sealed with the lubricant oil.

### (3) Third embodiment

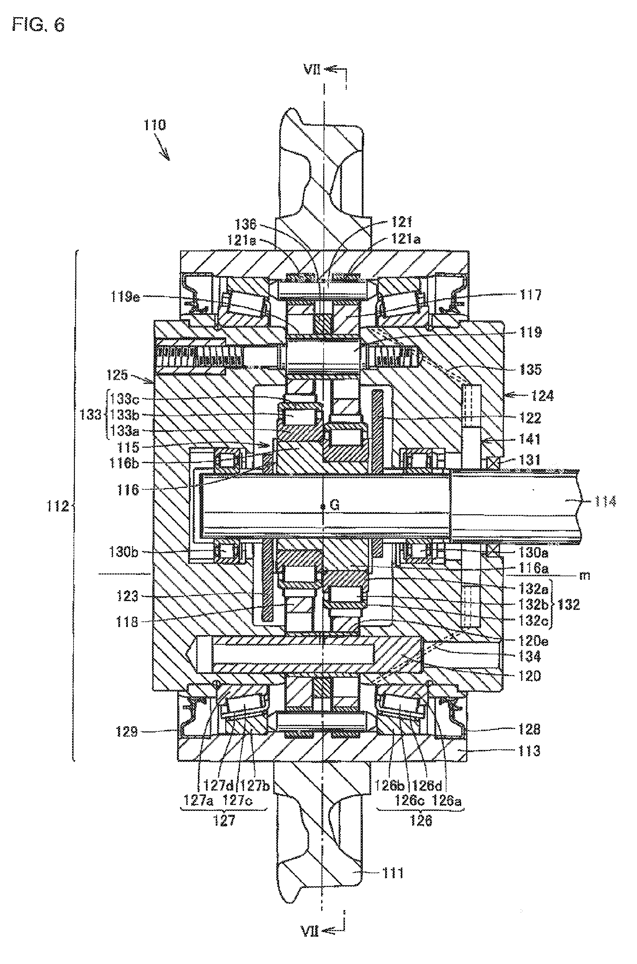

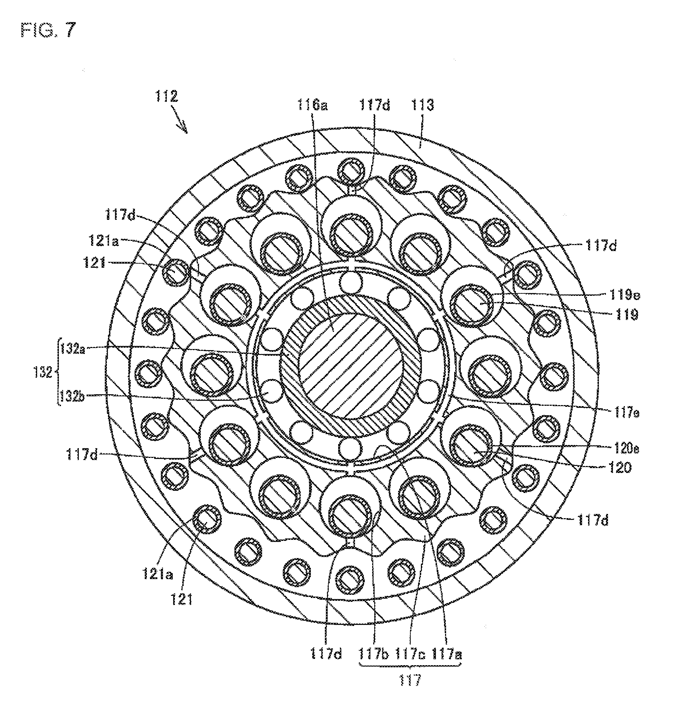

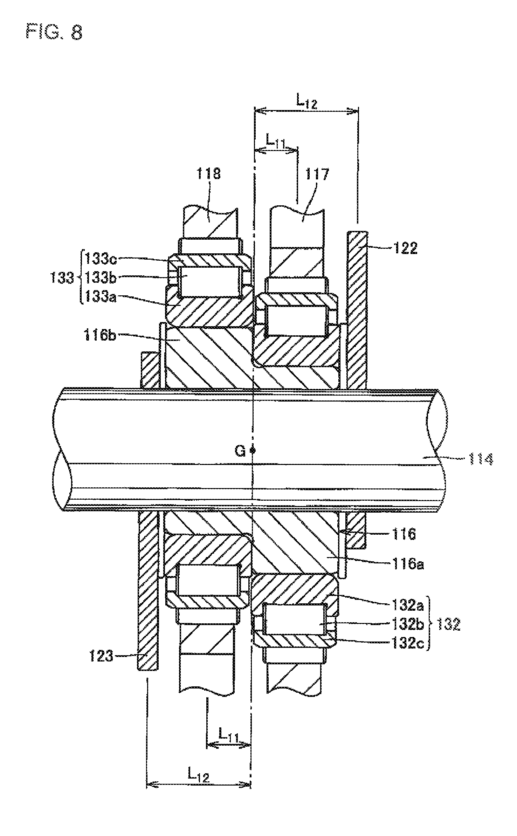

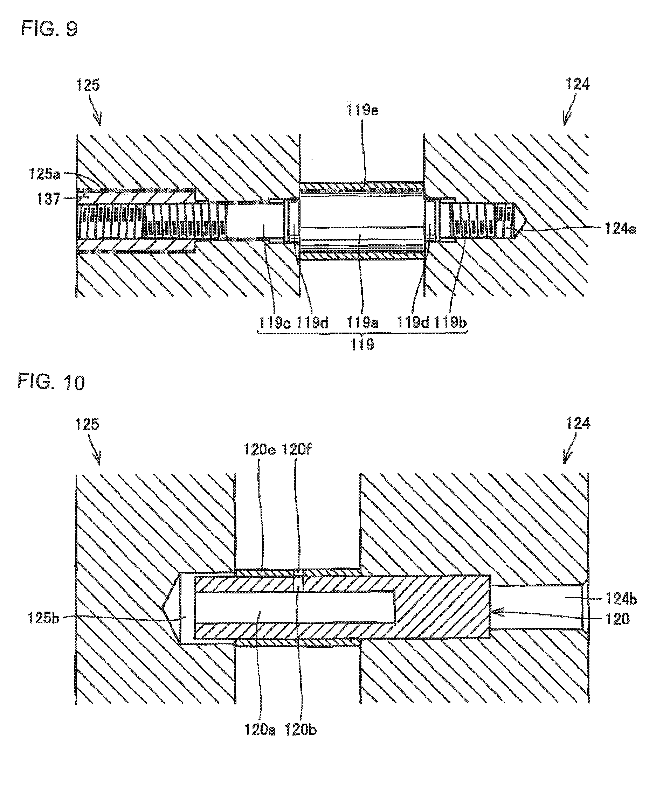

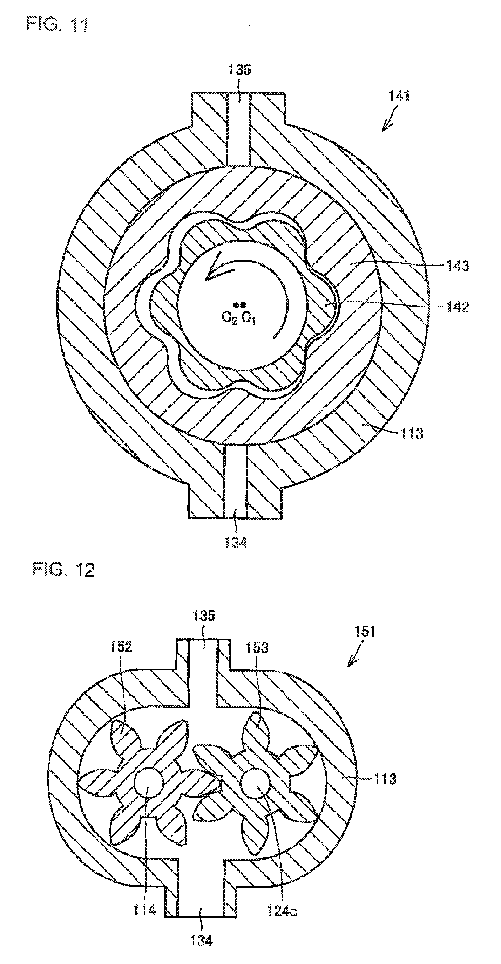

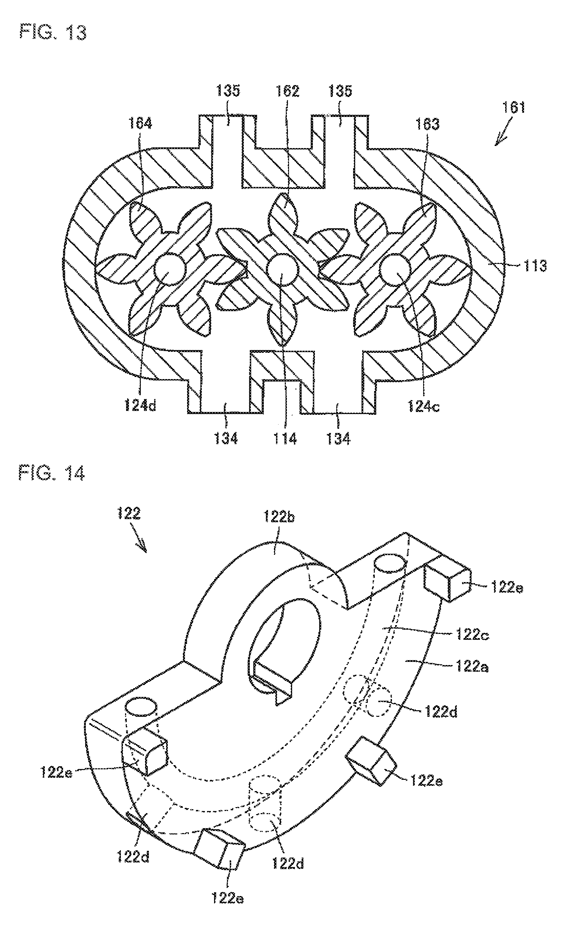

Next, a third embodiment of the present invention will be described. Figs. 6 to 14 are views showing a railway vehicle drive unit according to the third embodiment. Referring to these drawings, a description will be made of a railway vehicle drive unit 112 according to the third embodiment and a railway vehicle wheel drive device 110 including the railway vehicle drive unit 112. In addition, Fig. 6 is a schematic cross-sectional view of the railway vehicle wheel drive device 110, Fig. 7 is a cross-sectional view taken along a line VII-VII in Fig. 6, Fig. 8 is an enlarged view of a periphery of ecentric members 116a and 116b, Fig. 9 is an enlarged view of an inner pin 119, Fig. 10 is an enlarged view of an inner pin 120, Fig. 11 to 13 are views showing pumps as a lubricant oil transferring mechanism, and Fig. 14 is a view showing a counterweight 122 provided with a lubricant oil transferring mechanism.

First, referring to Fig. 6, the railway vehicle wheel drive device 110 is composed of a railway vehicle wheel 111 (hereinafter referred to as the "wheel 111"), and the drive unit 112 (hereinafter, referred to as "the railway vehicle drive unit 112") held on an inner diameter surface of the wheel 111 to reduce rotation speed of a drive source (not shown) and transmits it to the wheel 111, and arranged in a lower part of a railway vehicle body (not shown) similar to the above embodiment.

The railway vehicle drive unit 112 is mainly composed of a reducer housing 113, an input side rotation member 114, a reducing mechanism 115, first and second carriers 124 and 125 serving as fixed members, first and second axle bearings 126 and 127, and a lubricant oil transferring mechanism to transfer a lubricant oil by use of the rotation of the input side rotation member 114.

The reducer housing 113 has a space sealed with the lubricant oil and is held on an inner diameter surface of the wheel 111 similar to the above embodiment. The space sealed with the lubricant oil means a region surrounded by the reducer housing 113, the first and second carriers 124 and 125, and seal members 128 and 129. In addition, it internally holds the reducing mechanism 115.

The reducing mechanism 115 is composed of an eccentric member 116, curved plates 117 and 118 serving as revolution members, a plurality of inner pins 119 and 120 serving as rotation regulation members, a plurality of outer pins 121 serving as periphery engagement members, and members associated with the above components, and reduces rotation speed of the input side rotation member 114 and transmits it to the reducer housing 113.

In addition, the reducing mechanism 115 is arranged in the space sealed with the lubricant oil with at least one part thereof soaked in the lubricant oil. More specifically, the lubricant oil is sealed such that an oil surface height is at a position of the line m in Fig. 4 under the condition that the reducing mechanism 115 is stopped.

In addition, the first and second axle bearings 126 and 127 are arranged between an inner diameter surface of the reducer housing 113 and outer diameter surfaces of the first and second carriers 124 and 125. The reducer housing 113 is rotatable with respect to the first and second carriers 124 and 125, and also functions as an output side rotation member (axle) integrally rotating with the wheel 111.

The first axle bearing 126 is a tapered roller bearing including an inner ring 126a fixed to the outer diameter surface of the first carrier 124, an outer ring 126b fixed to the inner diameter surface of the reducer housing 113, a plurality of tapered rollers 126c arranged between the inner ring 126a and the outer ring 126b, a retainer 126d retaining an interval of the adjacent tapered rollers 126c. Since the second rolling bearing 127 has the same configuration, its description is not reiterated. When the tapered bearing having high load capacity is used as the first and second axle bearings 126 and 127, a radial load and an axial load applied to the wheel 111 can be appropriately supported.

In addition, the first axle bearing 126 and the second axle bearing 127 rotatably support the reducer housing 113 with respect to the first and second carriers 124 and 125 on one axial side (right side in Fig. 6) of a fit position (more specifically, "a fit width center of the wheel 111" shown by a dashed line in Fig. 6) of the wheel 111 and on the other axial side (left side in Fig. 6) of the fit position thereof, respectively. According to this embodiment, distances (offsets) of the first and second axle bearings 126 and 127 from the fit width center of the wheel 111 are set to be equal to each other.

Furthermore, the first and second axle bearings 126 and 127 are arranged such that their small, diameter side ends are opposed to each other (back-to-back coupling). Thus, a moment load applied to the wheel 111 can be appropriately supported.

In addition, seal members 128 and 129 to seal the lubricant oil in the reducer housing 113 are provided at both axial ends of the reducer housing 113. The seal members 128 and 129 each have lip parts being in sliding contact with the outer diameter surfaces of the first and second carriers 124 and 125, respectively, and are fixed to the inner diameter surface of the reducer housing 113, and integrally rotate with the reducer housing 13.

The input side rotation member 114 is connected to the drive source (such as a motor), and rotates with the rotation of the drive source. In addition, its both sides are supported by rolling bearings 130a and 130b on both sides of the curved plates 117 and 118, and rotatably held with respect to the first and second carriers 124 and 125. In addition, according to this embodiment, a cylindrical roller bearing is used as each of the rolling bearings 130a and 130b. In addition, a seal member 131 to seal the lubricant oil in the reducer housing 113 is arranged on the outer side (right side in Fig. 6) of the rolling bearing 130a.

The eccentric member 116 has the first and second eccentric parts 116a and 116b, and is fitted and fixed to the input side rotation member 114. The first and second eccentric parts 116a and 116b are arranged so as to offset the centrifugal force due to eccentric motion to each other, that is, their phases are shifted by 180°. Consequently, the first and second eccentric parts 116a and 116b also function as a balance adjusting mechanism to absorb unbalance load generated due to the eccentric motion.

The curved plate 117 is supported by a rolling bearing 132 so as to be relatively rotatable with respect to the first eccentric part 116a. In addition, it executes revolution motion around a rotation axis of the input side rotation member 114. Referring to Fig. 7, the curved plate 117 has first and second through holes 117a and 117b penetrating in a thickness direction, a plurality of waveforms 117c composed of a trochoid-based curve such as epitrochoid along its periphery, an oil path 117d internally extending in a radial direction, and a lubricant oil holding space 117e to temporarily hold the lubricant oil in the middle of the oil path 117d.

The first through hole 117a is formed in the center of the curved plate 117, and receives the first eccentric part 116a and the rolling bearing 132. The second through holes 117b are circumferentially provided around a rotation axis of the curved plate 117 at regular intervals, and receive the inner pins 119 and 120 held by the first and second carriers 124 and 125. The waveforms 117c engage with the outer pins 121 held by the reducer housing 113, and transmit the rotation of the curved plate 117 to the reducer housing 113. In addition, the curved plate 118 has' the same configuration, and is rotatably supported by a rolling bearing 133 with respect to the second eccentric part 116b.

The oil path 117d extends from the first through hole 117a to a peripheral surface of the curved plate 117. In addition, while a position of the oil path 117d is not limited in particular, it is preferably provided so as to pass through the second through hole 117b as shown in Fig. 2. Thus, the lubricant oil can be actively supplied to a contact part between the curved plate 117, and the inner pins 119 and 120. In addition, an end of the oil path 117d on the radial outer side is preferably formed in a valley part of the waveform 117c. Thus, the curved plate 117 and the outer pin 121 are prevented from being damaged when they engage with each other.

In addition, since the lubricant oil holding space 117e branches from the oil path 117d, the lubricant oil can be held in the curved plate 117 while a sufficient amount of lubricant oil is supplied, and the lubricant oil held in the lubricant oil holding space 117e can be discharged to the oil path 117d when the supply amount of the lubricant oil decreases. Thus, the lubricant oil can be more stably supplied.

The rolling bearing 132 is a cylindrical roller bearing provided with an inner ring member 132a fitted to an outer diameter surface of the eccentric part 116a and having an inner side track surface on its outer diameter surface, an outer side track surface directly formed on an inner diameter surface of the through hole 117a of the curved plate 117, a plurality of cylindrical rollers 132b arranged between the inner side track surface and the outer side track surface, and a retainer 132c retaining an interval of the adjacent cylindrical rollers 132b. Since the rolling bearing 133 has the same configuration, its description is not reiterated.

In addition, when it is assumed that a center point of the two curved plates 117 and 118 is G, the center point G coincides with a gravity center position of the wheel 111, but the center point G and the wheel gravity center position are preferably offset in order to minimize the moment load applied from the wheel 111 to the railway vehicle drive unit 112. Thus, the components (such as the curved plates 117 and 118, the inner pins 119 and 120, and the outer pin 121) are inclined to prevent an excessive load from being generated in the contact part. As a result, the railway vehicle drive unit 112 smoothly rotates, and its durability is improved.

In addition, a circumscribed ring 136 which is circumscribed on the plurality of inner pins 119 and 120 is arranged between the two curved plates 117 and 118. Thus, an axial motion amount of the curved plates 117 and 118 are regulated. In addition, since the curved plates 117 and 118 are in sliding contact with the circumscribed ring 136, it is preferable that their wall surfaces to be in contact with each other are subjected to a grinding treatment. In addition, a function of the circumscribed ring 136 may be replaced with an inscribed ring inscribed on the plurality of inner pins 119 and 120, or an inscribed ring inscribed on the plurality of outer pins 121.

The inner pins 119 and 120 are circumferentially provided around the rotation axis of the input side rotation member 114 at regular intervals. In addition, inner pin bearings 119e and 120e are mounted on positions (such as a large diameter part 119a in the case of the both-sided inner pin 119) which abuts on the inner wall surfaces of the second through holes 117b and 118b of the curved plates 117 and 118, respectively. Thus, frictional resistance between the curved plates 117 and 118, and the inner pins 119 and 120 can be reduced. In addition, the inner pin bearings 119e and 120e according to this embodiment are sliding bearings.

Referring to Fig. 9, the inner pin 119 includes the large diameter part 119a provided in its axial center, first and second small diameter parts 119b and 119c each having a diameter smaller than that of the large diameter part 119a and provided at its axial both ends, and a guide part 119d provided between the large diameter part 119a and each of the first and second small diameter parts 119b and 119c. A male screw is formed in a peripheral surface of each of the first and second small diameter parts 119b and 119c. An outer diameter of the guide part 119d is set so as to coincide with an inner diameter of holes 124a and 125a to receive the both-sided inner pin 119, and used to position the inner pin 119 in the radial direction with respect to the first and second carriers 124 and 125.

This inner pin 119 is the both-sided inner pin which is supported at both ends by the first and second carriers 124 and 125. More specifically, the first small diameter part 119b is directly fixed to the first carrier 124, and the second small diameter part 119c is fixed such that the second carrier 25 is pressed to an end face of the large diameter part 119a by a pressing and fixing means (which will be described below).

Referring to Fig. 10, the inner pin 120 is in the shape of a simple column having the same diameter in a whole longitudinal direction, and it is a cantilevered (hereinafter referred as "one-sided") inner pin in which only one axial side end is supported by the first carrier 124.

In addition, the one-sided inner pin 120 is provided with a lubricant oil holding space 120a formed in its inside, and a through hole 120b radially extending from the lubricant oil holding space 120a. Similarly, the inner pin bearing 120e is provided with a through hole 120f penetrating in the radial direction. In addition, while the positions of the through holes 120b and 120f are not limited in particular, they are preferably provided so as to be opposed to the space between the curved plates 117 and 118 as shown in Fig. 10.

The lubricant oil is held in the lubricant oil holding space 120a, and mainly supplied to between the inner pin 120 and the inner pin bearing 120e, and to the contact part between the inner pin bearing 120e and the curved plates 117 and 118. More specifically, the lubricant oil is held in the lubricant oil holding space 120e while a sufficient amount of lubricant oil is supplied, and the lubricant oil held in the lubricant oil holding space 120e is discharged through the through holes 120b and 120f when the supply amount of the lubricant oil decreases. Thus, the lubricant oil can be more stably supplied.

In addition, a porous material (not shown) impregnated with the lubricant oil may be stored in the lubricant oil holding space 120a. In this case, since the lubricant oil comes out gradually through the through holes 120b and 120f, the lubricant oil can be supplied stably over a long period of time. In addition, the porous material includes sintered metal or foamed grease.

In addition, while the one-sided inner pin 120 is only provided with the lubricant oil holding space 120a and the through hole 120b, and the inner pin bearing 120e is only provided with the through hole 120f in the above embodiment, the both-sided inner pin 119 and the inner pin bearing 119e may be similarly configured. In addition, not only the inner pins 119 and 120, but also the outer pin 121 and an outer pin bearing 121a may be also similarly configured.

In addition, diameters of the second through holes 117b and 118b are set to be larger by a predetermined amount than diameters (maximum outer diameters including the inner pin bearings 119e and 120e) of the inner pins 119 and 120. As a result, while the curved plates 117 and 118 try to rotate with the rotation of the input side rotation member 114, the inner pin 119 functions as the rotation regulation member to stop rotation motion of the curved plates, while allowing the revolution motions thereof.

The outer pins 121 are circumferentially provided around the rotation axis of the input side rotation member 114 at regular intervals. A center part of the outer pin 121 is held by the reducer housing, and both ends thereof abut on the axle bearings 126 and 127 and fixed thereto. Thus, the outer pin 121 engages with the waveforms 117c and 118c of the curved plates 117 and 118 to rotate the reducer housing 113 at speed reduced with respect to the input side rotation member 114.

Furthermore, the outer pin bearing 121a is attached to a position which abuts on the waveforms 117c and 118c of the curved plates 117 and 118. Thus, frictional resistance between the curved plates 117 and 118 and the outer pin 121 can be reduced. In addition, the outer pin bearing 121a according to this embodiment is a sliding bearing.

The counterweight 122 has a through hole to receive the input side rotation member 114, at a position other than its gravity center, and fitted and fixed to the input side rotation member 114 with its phase shifted so as to offset unbalance inertia couple due to the eccentric motion of the eccentric part 116a, that it, shifted by 180° from that of the eccentric part 116a. Consequently, the counterweight 122 functions as a balance adjusting mechanism to absorb an unbalance load generated due to the eccentric motion of the eccentric part 116a. In addition, a counterweight 123 has the same configuration, and is fitted and fixed to the input side rotation member 114 with its phase shifted to offset unbalance inertia couple due to eccentric motion of the eccentric part 116b.

Referring to Fig. 8, regarding the right side of the center point G of the two curved plates 117 and 118, a relationship that L₁₁ × m₁₁ × ε₁₁ = L₁₂ × m₁₂ × ε₁₂ is satisfied wherein L₁₁ represents a distance between the center point G and a center of the curved plate 117, m₁₁ represents a sum of the mass of the curved plate 117, the rolling bearing 132, and the eccentric part 116a, ε₁₁ represents an eccentric amount of the gravity center of the curved plate 117 from the rotation axis, L₁₂ represents a distance between the center point G and the counterweight 122, m₁₂ represents the mass of the counterweight 122, and ε₁₂ represents an eccentric amount of the gravity center of the counterweight 122 from the rotation axis. In addition, the same relationship is satisfied between the curved plate 118 and the counterweight 123 on the left side of the center point G in Fig. 3.

The first and second carriers 124 and 125 are connected and fixed to the railway vehicle body, and hold the inner pins 119 and 120 in wall surfaces opposed to the curved plates 117 and 118, and rotatably support each of the reducer housing 113 with the first and second axle bearings 126 and 127 fitted and fixed to their outer diameter surfaces, and the input side rotation member 114 with the rolling bearings 130a and 130b fitted and fixed to their inner diameter surfaces.

The first carrier 124 has the hole 124a to receive the first small diameter part 119b of the both-sided inner pin 119, and a hole 124b to receive the one axial side end of the one-sided inner pin 120. In addition, the hole 124a is a screw hole in which a female screw is formed on its inner wall surface. Meanwhile, the hole 124b is a simple hole (in which a screw is not formed).

The second carrier 125 has the hole 125a to receive the second small diameter part 119c of the both-sided inner pin 119, and a hole 125b to receive the other axial side end of the one-sided inner pin 120. In addition, a diameter of the through hole 125a is set to be larger than that of the second small diameter part 119c, and a diameter of the hole 125b is set to be larger than that of the one-sided inner pin 120.

Hereinafter, a description will be made of a method for mounting the inner pins 119 and 120 on the first and second carriers 124 and 125. First, the inner pins 119 and 120 are fixed to the first carrier 124. More specifically, the first small diameter part 119b of the both-sided inner pin 119 is screwed with the hole 124a and fixed thereto, and the one axial side end of the one-sided inner pin 120 is pressed in the hole 124b and fixed thereto.

In addition, the method for fixing the inner pins 119 and 120 to the first carrier 124 is not limited to the above example, and as another example, the one side end of the both-sided inner pin 119 may be pressed into the hole 124a, while screws are formed in each of the one side end of the one-sided inner pin 120 and the hole 124b, and they may be screwed.

Then, the inner pin bearings 119e and 120e are mounted on the inner pins 119 and 120, respectively.

Then, the second carrier 125 is mounted in such a manner that the second small diameter part 119c of the both-sided inner pin 119 is inserted into the through hole 125a, and the other axial side end of the one-sided inner pin 120 is inserted into the hole 125b. At this time, since a gap is provided between the inner pin 119 and 120 and the through holes 125a and 125b, respectively, some degree of production error and mounting error are allowed.

Finally, the both-sided inner pin 119 is fixed by the pressing and fixing means. The pressing and fixing means according to this embodiment is composed of a male screw provided in the second small diameter part 119c and a nut 137 to be screwed with it. That is, when the nut 137 is screwed with the second small diameter part 119c, the second carrier 125 is pressed toward the large diameter part 119a, so that the both-sided inner pin 119 can be strongly fixed to the first and second carriers 124 and 125.

At this time, the both-sided inner pin 119 is radially positioned by the guide part 119d. In addition, while the guide part 119d is in the cylindrical shape in Fig. 9, the present invention is not limited to this, and any shape may be employed. For example, when the guide part is in the shape of a cone in which its diameter gradually reduces toward the end of the both-sided inner pin 119, and opening parts of the holes 124a and 125a opposed to the both-sided inner pin 119 are formed into conical surfaces to correspond to the shape of the guide part, the positioning can be further easily performed.

According to the above embodiment, an assembling property is improved in the railway vehicle drive unit 112. In addition, with a view to improving the assembling property and reducing the number of components, the number of the both-sided inner pins 119 is desirably less than the number of the one-sided inner pin 120. However, since loads are applied from the curved plates 117 and 118 to the inner pins 119 and 120, it is desirable that the both-sided inner pins 119 and the one-sided inner pins 120 are arranged at regular intervals, respectively.

The lubricant oil transferring mechanism transfers the lubricant oil from a bottom region to an upper region in the above space sealed with the lubricant oil, by use of the rotation of the input side rotation member 114. More specifically, it includes a pump 141 arranged in the first carrier 124, a lubricant oil supply path 134 extending from the pump 141 toward the bottom region of the space sealed with the lubricant oil, to supply the lubricant oil to the pump 141, and a lubricant oil discharge path 135 extending from the pump 141 toward the upper region of the space sealed with the lubricant oil, to discharge the lubricant oil from the pump 141.

Referring to Fig. 11, the pump 141 is a cycloidal pump composed of a drive gear 142 having teeth around its outer diameter surface and integrally rotating with the input side rotation member 114, and a driven gear 143 having teeth around its inner diameter surface, rotatably supported by the first carrier 124, and rotating around a point c₂ which is shifted from a rotation center c₁ of the drive gear 142 in one horizontal direction.

The above pump 141 can discharge the lubricant oil pumped from the bottom region of the space through the lubricant oil supply path 134, to the upper region through the lubricant oil discharge path 135 when the input side rotation member 114 rotates in a counterclockwise direction (positive rotation).

Meanwhile, the above pump 141 cannot transfer the lubricant oil when the input side rotation member 114 rotates in a clockwise direction (negative rotation). Thus, it is preferable to provide a second pump capable of transferring the lubricant oil when the input side rotation member 114 rotates in the clockwise direction, separately from' the pump 141. More specifically, the pump has the same structure of the pump 141 except for having a reversed positional relationship between c₁ and c₂.

Referring to Fig. 12, a pump 151 according to another embodiment is composed of a drive gear 152 having teeth around its outer diameter surface and integrally rotating with the input side rotation member 114, and a driven gear 153 having teeth meshing with the drive gear 152 around its outer diameter surface, and rotatably arranged on one horizontal direction of the drive gear 152. In addition, according to this embodiment, the driven gear 153 is fitted and fixed to a rotation shaft 124c rotatably mounted on the first carrier 124.

Even when the above pump 151 is used instead of the pump 141 in Fig. 11, the lubricant oil can be transferred when the input side rotation member 114 rotates in the counterclockwise direction. In addition, by providing a second pump having the same structure as that of the pump 141 except for having a reversed positional relationship between the drive gear 152 and the driven gear 153, the lubricant oil can be transferred when the input side rotation member 114 rotates in the clockwise direction.

Furthermore, referring to Fig. 13, a pump 161 according to still another embodiment is composed of a drive gear 162 having teeth around its outer diameter surface, and integrally rotating with the input side rotation member 114, a first driven gear 163 having teeth meshing with the drive gear 162 around its outer diameter surface, and rotatably arranged one horizontal direction of the drive gear 162, and a second driven gear 164 having teeth meshing with the drive gear 162 around its outer diameter surface, and rotatably arranged on the other horizontal side of the drive gear 162. In addition, according to this embodiment, the driven gears 163 and 164 are fitted and fixed to rotation shafts 124c and 124d rotatably mounted on the first carrier 124.

According to the above pump 161, when the input side rotation member 114 rotates in the counterclockwise direction, the drive gear 162 and the first driven gear 163 function as first pumps to transfer the lubricant oil. Meanwhile, when the input side rotation member 114 rotates in the clockwise direction, the drive gear 162 and the second driven gear 164 function as second pumps to transfer the lubricant oil. Thus, as compared with the case where the pump 141 or 151 shown in Fig. 11 or Fig. 12 is arranged at two positions, a space for the pump can be small.

while the pump is used as the lubricant oil transferring mechanism in the above embodiment, the present invention is not limited to this, and any configuration may be used as long as the lubricant oil is transferred by the use of the rotation of the input side rotation member 114. For example, as shown in Fig. 14, the lubricant oil transferring mechanism may be provided in the counterweight 122. Since a counterweight 123 is similarly configured, its description is not reiterated.

Referring to Fig 14, the counterweight 122 includes a large diameter fan-shaped part 122a, and a small diameter fan-shaped part 122b having a radius smaller than that of the large diameter fan-shaped part 122a, and connected to the large diameter fan-shaped part 122a such that their chords are in contact with each other.

In addition, the large diameter fan-shaped part 122a is provided with a circumferential oil path 122c having an opening part in its chord and circumferentially extending in the large diameter fan-shaped part 122a, and a radial oil path 122d extending from the circumferential oil path 122c toward an outer diameter surface of the large diameter fan-shaped part 122a. In addition, a plurality of fins 122e protruding in a thickness direction are provided on an end face of the balance weight 122.

An operational principle of the above railway vehicle drive unit 112 will be described in detail.

First, the input side rotation member 114 and the eccentric member 116 integrally rotate with the rotation of the drive source. At this time, while the curved plates 117 and 118 also try to rotate, their rotation motion is stopped by the inner pins 119 and 120 passing through the second through holes 117b and 118b, so that they only execute the revolution motion. That is, the curved plates 117 and 118 shift in parallel on the circumferential track around the rotation axis of the input side rotation member 114.

When the curved plates 117 and 118 execute the revolution motion, the waveforms 117c and 118c engage with the outer pins 121, the reducer housing 113 and the wheel 111 integrally rotate in the same direction as that of the input side rotation member 114. At this time, the rotation speed transmitted from the curved plates 117 and 118 to the reducer housing 113 has been reduced and torque is high.

More specifically, a reduction ratio of the railway vehicle drive unit 112 is calculated by a formula Z_{B1}/(Z_{A1}-Z_{B1}) wherein Z_{A1} represents the number of the outer pins 121, and Z_{B1} represents the number of the waveforms of the curved plates 117 and 118, and a speed ratio in this embodiment shown in Fig. 1 is calculated by a formula 1/(n1+1) wherein n1 represents the reduction ratio. Since Z_{A1} = 24 and Z_{B1} = 22 in the embodiment shown in Fig. 2, the reduction ratio is 11, and the speed ratio is 1/12. Therefore, even when a low-torque high-rotation type drive source is used, the torque required for the wheel 111 can be transmitted.

Thus, by employing the reducing mechanism 15 capable of obtaining the high reduction ratio without needing a multistage configuration, the railway vehicle drive unit 112 can be compact in size and implement the high reduction ratio. In addition, by providing the pin bearings 119e and 120e and the outer pin bearing 121a for the inner pins 119 and 120 and the outer pin 121, respectively which abut on the curved plates 117 and 118, the frictional resistance in the contact part is reduced. As a result, transmission efficiency is improved in the railway vehicle drive unit 112.

Hereinafter, the flow of the lubricant oil in the above railway vehicle drive unit 112 will be described in detail. First, the lubricant oil is sealed in the space sealed with the lubricant oil in the reducer housing 113, that is, in the region surrounded by the reducer housing 113, the first and second carriers 124 and 125, and the seal members 128 and 129, and an oil surface height is at the position of a line m in Fig. 6 under the condition that the reducing mechanism 15 is stopped.

When the input side rotation member 114 rotates, the pump 141 serving as the lubricant oil transferring mechanism discharges the lubricant oil pumped from the bottom region of the space sealed with the lubricant oil through the lubricant oil supply path 134, to the upper region through the lubricant oil discharge path 135. In addition, the counterweight 122 serving as the lubricant oil transferring mechanism rotates and moves between the bottom region and the upper region in the space sealed with the lubricant oil. At this time, in the bottom region, the lubricant oil is stored in the circumferential oil path 122c and the radial oil path 122d, and in the upper region, the lubricant oil is discharged, and the lubricant oil is propelled upward by the fin 122e. Thus, the lubricant oil can be supplied to the upper region of the space sealed with the lubricant oil (the region on the upper side of the input side rotation member 114 in Fig. 6).

The lubricant oil discharged by the lubricant oil transferring mechanism lubricates the components positioned in the upper region, especially, the space between the inner pin 119 and the inner bin bearing 119e, and the space between the inner pin bearing 119e and the curved plates 117 and 118 while being returned to the bottom region due to gravity. In addition, it is partially held in the lubricant oil holding spaces 117e and 120a.

Thus, when the lubricant oil transferring mechanism is configured as described above, the lubricant oil can be actively supplied to the upper region of the space sealed with the lubricant oil in the reducer housing 113, so that the railway vehicle drive unit 112 can be superior in lubrication performance. In addition, all the above-described lubricant oil transferring mechanisms (the pumps 141, 151, and 161, and the counterweight 122) are not necessarily provided, and the effect of the present invention can be provided even with at least one of them.

In addition, the counterweights 122 and 123 having the lubricant oil transferring mechanism are arranged with their phases shifted by 180° in the embodiment shown in Fig. 6. Thus, when one large diameter fan-shaped part is positioned in the bottom region of the space sealed with the lubricant oil in the reducer housing 113, the other large diameter fan-shaped part discharges the lubricant oil in the upper region of the space sealed with the lubricant oil in the reducer housing 113. As a result, the lubricant oil can be stably transferred.

### (4) Fourth embodiment

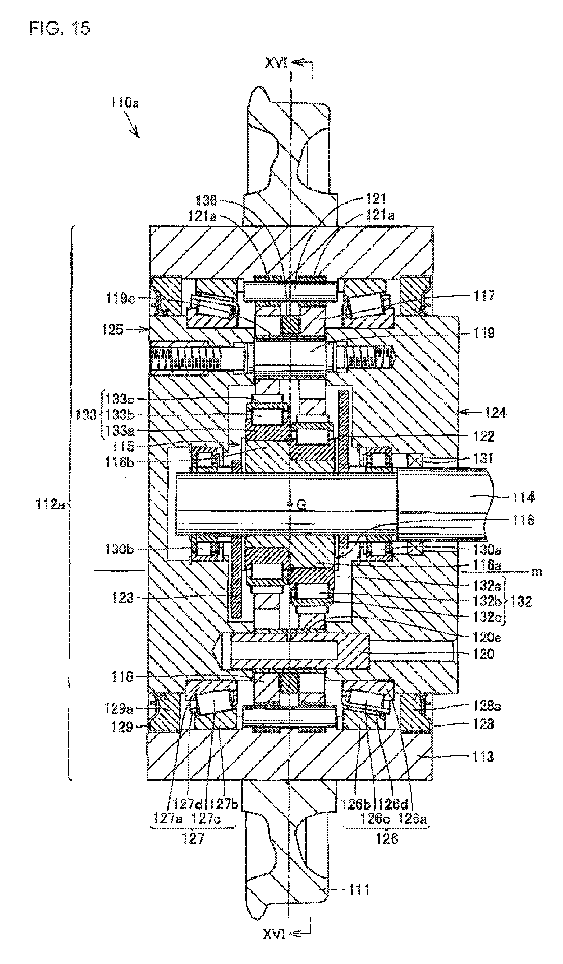

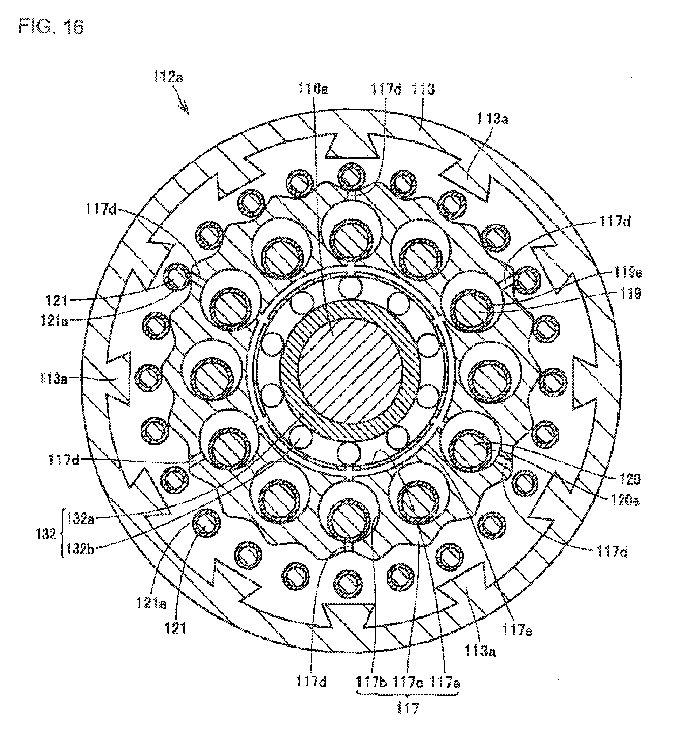

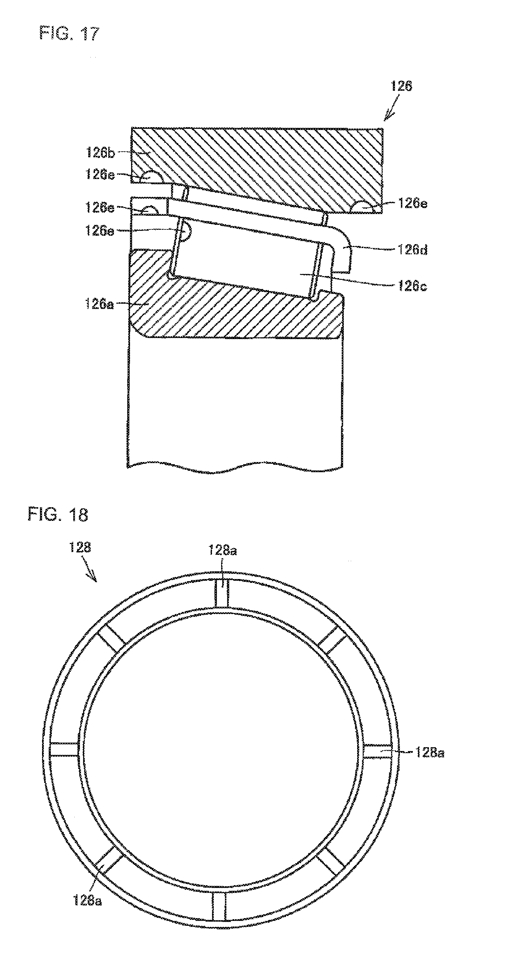

Next, a description will be made of a railway vehicle drive unit 112a according to a fourth embodiment of the present invention, and a railway vehicle wheel drive device 110a including the railway vehicle drive unit 112a. In addition, the same reference is allocated to the same component as that of the second embodiment in the following drawings and its description is not reiterated. Fig. 15 is a schematic cross-sectional view of the railway vehicle wheel drive device 110a, Fig. 16 is a cross-sectional view taken along a line XI-XI in Fig. 15, and Fig. 17 is a view showing a first axel bearing 126, and Fig. 18 is a front view of a seal member 128.

Referring to Fig. 15, the railway vehicle drive unit 112a according to another embodiment is mainly composed of a reducer housing 113, an input side rotation member 114, a reducing mechanism 115, first and second carriers 124 and 125 serving as fixed members, first and second axle bearings 126 and 127, and a lubricant oil transferring mechanism to transfer a lubricant oil by use of the rotation of the reducer housing 113.

The lubricant oil transferring mechanism transfers the lubricant oil from a bottom region to an upper region of a space sealed with the lubricant oil, that is, a region surrounded by the reducer housing 113, the first and second carriers 124 and 125, and seal members 128 and 129, by the use of the rotation of the reducer housing 113. More specifically, it is a mechanism composed of a concavo-convex part formed in a surface of the reducer housing 113, and members rotating with the rotation of the reducer housing 113. In addition, "members rotating with the rotation of the reducer housing 113" correspond to an outer pin 121 and an outer pin bearing 121a, outer rings 126b and 127b, tapered rollers 126c and 127c, and retainers 126d and 127d of the first and second axle bearings 126 and 127, and the seal members 128 and 129.

Referring to Fig. 16, a concavo-convex part 113a is formed in the inner diameter surface of the reducer housing 113. The concavo-convex part 113a according to this embodiment is a protrusion extending in a direction intersecting with a rotation direction of the reducer housing 113. In addition, this concavo-convex part 113a may be directly formed in the inner diameter surface of the reducer housing 113, or an annular belt (not shown) having the concavo-convex part 113a in its inner diameter surface may be fixed on the inner diameter surface of the reducer housing 113.

While the shape of the protrusion is not limited in particular, according to this embodiment, a cross section of the protrusion taken along a line perpendicular to a rotation axis of the reducer housing 113 is in a shape of an isosceles trapezoid having a short side and a long side which are parallel to each other. The protrusion is arranged such that the short side is in contact with the inner diameter surface of the reducer housing 113. In other words, a wall surface of the protrusion opposed to the circumferential direction of the reducer housing 113 (the wall surface corresponding to an oblique side of the isosceles trapezoid) is in contact with a tangent line of the inner diameter surface of the reducer housing 113 at a sharp angle. Thus, an ability to hold the lubricant oil by the protrusion is improved.

In addition, the protrusions are arranged in 12 positions around the inner diameter surface of the reducer housing 113 at intervals of 30°. Thus, by providing the protrusions at regular intervals, the lubricant oil can be stably transferred.

Referring to Fig. 17, concavo-convex parts 126e are also formed in the first axle bearing 126. The concavo-convex parts 126e according to this embodiment are provided in an inner diameter surface of the outer ring 126b, an end face of the tapered roller 126c, and an end face of the retainer 126d. In addition, since the second axle bearing 127 is similarly provided, its description is not reiterated.

Referring to Fig. 15, the seal member 128 is provided with a weir 128a expanding in a direction intersecting with the rotation direction of the reducer housing 113. This weir 128a also functions as the lubricant oil transferring mechanism. Referring to Fig. 18, the weirs 128a according to this embodiment are regularly provided in 8 positions at intervals of 45°.

In addition, since the other components constituting the railway vehicle drive unit 112b are the same as those of the railway vehicle drive unit 112 according to the second embodiment, their descriptions are not reiterated.

Here, a detailed description will be made of a flow of the lubricant oil of the railway vehicle drive unit 112a according to another embodiment. First, the lubricant oil is sealed in a space of the reducer housing 113, that is, in the region surrounded by the reducer housing 113, the first and second carriers 124 and 125, and the seal members 128 and 129, and an oil surface height is at a position of a line m in Fig. 15 under the condition that the reducing mechanism 15 is stopped.

When the reducer housing 113 rotates, the lubricant oil transferring mechanism (the concavo-convex parts 113a and 126e, and the weir 128) moves between the bottom region and the upper region of the space sealed with the lubricant oil while rotating in the space. At this time, the lubricant oil is stored in a bottom region, and the lubricant oil is discharged in an upper region. Thus, the lubricant oil can be supplied to an upper region (region on the upper side of the input side rotation member 114 in Fig. 15) in the space sealed with the lubricant oil.

The lubricant oil discharged by the lubricant oil transferring mechanism lubricates the components positioned in the upper region, such as the space between the inner pin 119 and the inner pin bearing 119e, and the space between the inner pin bearing 119e and the curved plates 117 and 118, while being returned to the bottom region due to the gravity. In addition, it is partially held in lubricant oil holding spaces 117e and 120a.

When the lubricant oil transferring mechanism is configured as described above, the lubricant oil can be actively supplied to the upper region in the space sealed with the lubricant oil in the reducer housing 113, so that the railway vehicle drive unit 112a can be superior in lubrication performance. In addition, there is no need to provide all the above-described lubricant oil transferring mechanisms (the concavo-convex parts 113 and 126e, and the weir 128), and the effect of the present invention can be provided even with at least one of them.

In addition, while the curved plates 117 and 118 of the reducing mechanism 15 are arranged with their phases shifted by 180° in the above embodiment, the number of the curved plates can be optionally set. For example, when three curved plates are provided, for example, they are arranged with their phases shifted by 120°.

In addition, while the eccentric member 116 having the eccentric parts 116a and 116b is fitted and fixed to the input side rotation member 114 in the above embodiment, the present invention is not limited to this, and the eccentric parts 116a and 116b may be formed directly on the outer surface of the input side rotation member 114.

In addition, while the lubricant oil transferring mechanism transfers the lubricant oil by use of the rotation of the input side rotation member 114 as one embodiment, and the lubricant oil transferring mechanism transfers the lubricant oil by use of the rotation of the reducer housing 113 as another embodiment, in the third embodiment, the present invention is not limited to the above embodiments, and the lubricant oil transferring mechanism may transfer the lubricant oil by use of both of the rotations of the input side rotation member 114 and the reducer housing 113. For example, the lubricant oil may be transferred by providing the above-described pump 141 and also providing the concavo-convex parts 126e in the first axle bearing 126. Thus, the lubrication performance can be further improved.

In addition, the rolling bearings 126, 127, 130a, 130b, 132, and 133 in the above embodiments are not limited to the configurations shown in the drawing, and various kinds of bearings can be used such as a sliding bearing, cylindrical roller bearing, tapered roller bearing, needle roller bearing, self-aligning roller bearing, deep groove ball bearing, angular ball bearing, three point contact ball bearing, or four point contact ball bearing, regardless of whether the sliding bearing or the rolling bearing, regardless of whether a rolling body is the roller or ball, and regardless of whether a double row or single row.

In addition; while the inner pin bearing 119e and 120e and the outer pin bearing 121a in the above embodiment are the sliding bearings, the present invention is not limited to this, and a rolling bearing may be employed. In this case, it is preferable to employ a needle roller bearing with a view to reducing a size in a thickness direction.

Although the embodiments of the present invention have been described with reference to the drawings in the above, the present invention is not limited to the above-illustrated embodiments. Various kinds of modifications and variations may be added to the illustrated embodiments within the same or equal scope of the present invention.

### INDUSTRIAL APPLICABILITY

The present invention can be advantageously applied to a railway vehicle drive unit.

## Claims

1. A railway vehicle drive unit to rotatably drive a wheel of a railway vehicle, comprising:
a reducer housing held on an inner diameter surface of the wheel, and integrally rotating with the wheel;
an input side rotation member connected to a drive source;
a reducing mechanism to reduce rotation speed of said input side rotation member and transmit it to said reducer housing;
a fixed member arranged in said reducer housing, and connected and fixed to a vehicle body;
an axle bearing to rotatably support said reducer housing with respect to said fixed member; and
a lubricant oil circulating mechanism to circulate a lubricant oil between said reducing mechanism and said axle bearing.

2. The railway vehicle drive unit according to claim 1, wherein
said lubricant oil circulating mechanism circulates the lubricant oil by use of centrifugal force generated with the rotation of said input side rotation member.

3. The railway vehicle drive unit according to claim 1, wherein
said lubricant oil circulating mechanism includes a lubricant oil path radially penetrating an inside of said fixed member to return the lubricant oil from a radial outer side to a radial inner side.

4. The railway vehicle drive unit according to claim 3, wherein
said axle bearing is a tapered roller bearing including an inner ring fixed to an outer diameter surface of said fixed member, an outer ring fixed to an inner diameter surface of said reducer housing, and a plurality of tapered rollers arranged between said inner ring and said outer ring,
a seal member to seal said reducer housing is arranged between said reducer housing and said fixed member so as to be opposed to a large diameter side end of said tapered roller, and
an opening part of said lubricant oil path on the radial outer side is provided between said tapered roller bearing and said seal member.

5. The railway vehicle drive unit according to claim 4, wherein
said seal member has a lip part being slidably in contact with the outer diameter surface of said fixed member, and it is fixed to the inner diameter surface of said reducer housing, and integrally rotates with said reducer housing.

6. The railway vehicle drive unit according to claim 3, wherein
said input side rotation member has an eccentric part,
said reducing mechanism includes:
a revolution member rotatably supported with respect to said eccentric part, to execute revolution motion around a rotation axis of said input side rotation member;
a rotation regulation member to prevent rotation motion of said revolution member, allowing the revolution motion thereof; and
a periphery engagement member fixed to said reducer housing, to rotate said reducer housing at speed reduced with respect to said input side rotation member by engaging with a periphery of said revolution member, and
an opening part of said lubricant oil path on the radial inner side is provided in a position opposed to said eccentric part.

7. The railway vehicle drive unit according to claim 1, wherein
said reducing mechanism is held in a space sealed with the lubricant oil, and
said lubricant oil circulating mechanism is provided with a lubricant oil holding chamber communicating with said space sealed with said lubricant oil in such a manner that said lubricant oil can be moved between it and said space.

8. The railway vehicle drive unit according to claim 7, wherein
said lubricant oil holding chamber is arranged in said reducer housing, and
said space and said lubricant oil holding chamber are connected through a vent hole to uniform their internal pressures and a lubricant oil passage to uniform their oil surface heights.

9. The railway vehicle drive unit according to claim 7, further comprising:
a detecting means for detecting a state of the lubricant oil sealed in said space; and
a lubricant oil moving means for moving the lubricant oil between said space and said lubricant oil holding chamber, based on a detected result of said detecting means.

10. The railway vehicle drive unit according to claim 9, wherein
said lubricant oil moving means is a pressure adjustment device to increase a pressure in said lubricant oil holding chamber under the condition that the detected result of said detecting means exceeds a threshold value, and decrease the pressure in said lubricant oil holding chamber under the condition that the detected result of said detecting means falls below the threshold value.

11. The railway vehicle drive unit according to claim 10, wherein
said lubricant oil holding chamber has a piston to separate its inside into a first region isolated from said space, and a second region communicating with said space, and
said pressure adjustment device increases or decreases the pressure in said lubricant oil holding chamber by moving said piston.

12. The railway vehicle drive unit according to claim 9, wherein
said detecting means is a temperature sensor to detect a temperature of the lubricant oil sealed in said space.

13. The railway vehicle drive unit according to claim 9, wherein
said detecting means is a rotation sensor to detect rotation speed of said input side rotation member.

14. The railway vehicle drive unit according to claim 9, wherein
said lubricant oil holding chamber is provided outside said reducer housing.

15. The railway vehicle drive unit according to claim 7, wherein
said lubricant oil holding chamber is provided with a filter device to filter the internal lubricant oil.

16. The railway vehicle drive unit according to claim 1, wherein
said reducing mechanism is held in a space sealed with the lubricant oil, and
said lubricant oil circulating mechanism comprises a lubricant oil transferring mechanism to transfer the lubricant oil from a bottom region to an upper region in said space, by use of at least one rotation of said reducer housing and said input side rotation member.

17. The railway vehicle drive unit according to claim 16, wherein
said lubricant oil transferring mechanism transfers the lubricant oil from the bottom region to the upper region in said space, by use of the rotation of said input side rotation member.

18. The railway vehicle drive unit according to claim 17, further comprising a fixed member arranged in said reducer housing, and connected and fixed to the vehicle body, wherein
said fixed member internally includes:
said lubricant oil transferring mechanism;
a lubricant oil supply path extending from said lubricant oil transferring mechanism toward the bottom region in said space, to supply the lubricant oil to said lubricant oil transferring mechanism, and
a lubricant oil discharge path extending from said lubricant oil transferring mechanism toward the upper region in said space, to discharge the lubricant oil from said lubricant oil transferring mechanism.

19. The railway vehicle drive unit according to claim 17, wherein
said lubricant oil transferring mechanism includes a first pump to pump up the lubricant oil in response to a positive rotation of said input side rotation member, and a second pump to pump up the lubricant oil in response to a negative rotation of said input side rotation member.

20. The railway vehicle drive unit according to claim 19, wherein
said first pump comprises a first drive gear having teeth around its outer diameter surface, and integrally rotating with said input side rotation member, and a first driven gear having teeth meshing with said first drive gear, around its inner diameter surface, and being rotatably supported by said fixed member, and rotating around a point shifted from a rotation center of said first drive gear to one horizontal direction, and
said second pump comprises a second drive gear having teeth around its outer diameter surface and integrally rotating with said input side rotation member at a position different from that of said first pump, and a second driven gear having teeth meshing with said second drive gear, around its inner diameter surface, and being rotatably supported by said fixed member, and rotating around a point shifted from a rotation center of said second drive gear to the other horizontal direction.

21. The railway vehicle drive unit according to claim 19, wherein
said first pump is composed of a drive gear having teeth around its outer diameter surface and integrally rotating with said input side rotation member, and a first driven gear having teeth meshing with said drive gear, around its outer diameter surface, and being rotatably arranged on one side of said drive gear in a horizontal direction, and
said second pump is composed of said drive gear, and a second driven gear having teeth meshing with said drive gear, around its outer diameter surface, and being rotatable arranged on the other side of said drive gear in the horizontal direction.

22. The railway vehicle drive unit according to claim 17, wherein
said input side rotation member has an eccentric part,
said reducing mechanism comprises:
a revolution member rotatably supported with respect to said eccentric part, to execute revolution motion around a rotation axis of said input side rotation, member;
a plurality of rotation regulation members to prevent rotation motion of said revolution member, allowing the revolution motion thereof;
a periphery engagement member fixed to said reducer housing, to rotate said reducer housing at speed reduced with respect to said input side rotation member by engaging with a periphery of said revolution member; and
a counterweight fitted and fixed to said input side rotation member with a phase so as to offset unbalance inertia coupling due to eccentric motion, and
said lubricant oil transferring mechanism is provided in said counterweight.

23. The railway vehicle drive unit according to claim 22, wherein
said counterweight includes a large diameter fun-shaped part, and a small diameter fun-shaped part having a radius smaller than that of said large diameter fun-shaped part and connected to said large diameter fun-shaped part in such as manner that their chords are in contact with each other, and
said lubricant oil transferring mechanism has an opening part in the chord of said large diameter fun-shaped part, and includes a circumferential oil path circumferentially extending in said large diameter fun-shaped part, and a radial oil path extending from said circumferential oil path toward an outer diameter surface of said large diameter fun-shaped part.

24. The railway vehicle drive unit according to claim 22, wherein
said counterweight includes a large diameter fun-shaped part, and a small diameter fun-shaped part having a radius smaller than that of said large diameter fun-shaped part and connected to said large diameter fun-shaped part in such as manner that their chords are in contact with each other, and
said lubricant oil transferring mechanism is a fin projecting from an end face of said large diameter fun-shaped part in a thickness direction.

25. The railway vehicle drive unit according to claim 23, wherein
said reducing mechanism has a plurality of said counterweights arranged in such a manner that phases of said large diameter fun-shaped parts differ from each other.

26. The railway vehicle drive unit according to claim 16, wherein
said lubricant oil transferring mechanism transfers the lubricant oil from the bottom region to the upper region in said space, by use of the rotation of said reducer housing.

27. The railway vehicle drive unit according to claim 26, wherein
said lubricant oil transferring mechanism is composed of concavo-convex parts formed in surfaces of said reducer housing, and a member rotating with the rotation of said reducer housing.

28. The railway vehicle drive unit according to claim 27, wherein
said concavo-convex part is a projection projecting from an inner diameter surface of said reducer housing and extending in a direction intersecting with a rotation direction of said reducer housing.

29. The railway vehicle drive unit according to claim 28, wherein
said projections are provided in a plurality positions in the inner diameter surface of said reducer housing, at regular intervals.

30. The railway vehicle drive unit according to claim 28, wherein
a wall surface of said projection opposed to a circumferential direction of said reducer housing is in contact with a tangent line of the inner diameter surface of said reducer housing, at an acute angle.

31. The railway vehicle drive unit according to claim 30, wherein
a cross-sectional shape of said projection perpendicular to a rotation axis of said reducer housing is an isosceles trapezoid having a long side and a short side parallel to each other, and said short side is arranged so as to be in contact with the inner diameter surface of said reducer housing.

32. The railway vehicle drive unit according to claim 28, wherein
said projection is formed in an inner diameter surface of an annular belt fixed in the inner diameter surface of said reducer housing.

33. The railway vehicle drive unit according to claim 27, further comprising:
a fixed member arranged in said reducer housing, and connected and fixed to the vehicle body; and
an axle bearing comprising an inner ring fixed to an outer diameter surface of said fixed member, an outer ring fixed to an inner diameter surface of said reducer housing, a plurality of rolling bodies arranged between said inner ring and said outer ring, and a retainer retaining an interval of said adjacent rolling bodies, and rotatably supporting said reducer housing with respect to said fixed member, wherein
said concavo-convex part is provided in at least one of said outer ring, said rolling body, and said retainer.

34. The railway vehicle drive unit according to claim 26, further comprising:
a fixed member arranged in said reducer housing, and connected and fixed to the vehicle body, and
an annular seal member fixed to an inner diameter surface of said reducer housing, to seal a space between said reducer housing and said fixed member, wherein
said lubricant oil transferring mechanism is a weir expanding from said seal member to a direction intersecting with a rotation direction of said reducer housing.
